(19) **Europäisches Patentamt / European Patent Office / Office européen des brevets**

(11) **EP 4 701 106 A1**

(12) **EUROPEAN PATENT APPLICATION**
published in accordance with Art. 153(4) EPC

(43) Date of publication:
**25.02.2026 Bulletin 2026/09**

(21) Application number: **23941116.8**

(22) Date of filing: **16.06.2023**

(51) International Patent Classification (IPC):
**H04L 1/00** *(2006.01)*      **H04L 27/36** *(2006.01)*

(52) Cooperative Patent Classification (CPC):
**H04L 1/00; H04L 27/36**

(86) International application number:
**PCT/CN2023/100856**

(87) International publication number:
**WO 2024/254883 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **HUANG, Huang
Shenzhen, Guangdong 518129 (CN)**
• **MA, Qianli
Shenzhen, Guangdong 518129 (CN)**

(74) Representative: **Maiwald GmbH
Elisenhof
Elisenstraße 3
80335 München (DE)**

(54) **CODING MODE DETERMINATION METHOD AND COMMUNICATION APPARATUS**

(57)      This application provides a coding scheme determining method and a communication apparatus. The method includes: determining a modulation scheme, where the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and sending first indication information to a terminal device, where the first indication information indicates the modulation scheme. According to the method provided in this application, a network device can dynamically determine a signal modulation scheme based on at least one of a specified threshold of the modulation order, a specified threshold of the bandwidth extension, a specified threshold of the scheduled bandwidth, a specified threshold of the spectral efficiency, a specified threshold of the modulation and coding scheme MCS index, and a specified threshold of the code rate, so that more OQAMs can be introduced, to generate signals with a low PAPR.

Method 700

FIG. 7

EP 4 701 106 A1

**Description**

**TECHNICAL FIELD**

This application relates to the field of communication technologies, and more specifically, to a coding scheme determining method and a communication apparatus.

**BACKGROUND**

Generally, when a peak to average power ratio (peak to average power ratio, PAPR) is excessively high, signal distortion is caused. To ensure that a receiver end can normally parse signals, average power needs to be reduced. However, this lowers efficiency of power amplifiers, or equivalently, decreases a signal coverage area. Therefore, to meet signal coverage requirements, there is a need for selection of a signal generation technology with a low PAPR.

In related technologies, when a quadrature amplitude modulation (Quadrature Amplitude Modulation, QAM) is used, generated signals have a relatively high PAPR. Therefore, when network devices use QAM, PAPR can be reduced through spectrum extension, that is, by increasing a quantity of transmitted subcarriers. However, increasing the quantity of transmitted subcarriers occupies more frequency resources and reduces spectral efficiency.

**SUMMARY**

This application provides a coding scheme determining method and a communication apparatus, to dynamically determine a signal modulation scheme by setting a threshold of a first parameter, so as to introduce more OQAMs to generate signals with a low PAPR.

According to a first aspect, a coding scheme determining method is provided. The method provided in the first aspect may be performed by a network device, or may be performed by a chip disposed in the network device. This is not limited in this application.

Specifically, the method includes: determining a modulation scheme, where the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and sending first indication information to a terminal device, where the first indication information indicates the modulation scheme.

According to the method provided in the first aspect, the network device can determine a signal modulation scheme based on at least one of a specified threshold of the modulation order, a specified threshold of the bandwidth extension, a specified threshold of the scheduled bandwidth, a specified threshold of the spectral efficiency, a specified threshold of the modulation and coding scheme MCS index, and a specified threshold of the code rate, so that more OQAMs can be introduced, to generate signals with a low PAPR.

It should be understood that the threshold of the first parameter may be directly configured by the network device, or may be predefined in a protocol. This is not limited in embodiments of this application.

In a possible implementation of the first aspect, when the threshold of the first parameter meets at least one of the following, the modulation scheme is an OQAM: a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

In this implementation, a lower modulation order indicates a larger PAPR gain of the OQAM than a QAM. Therefore, a large gain can be obtained by supporting a low-order modulation order, and no modification is made for high-order modulation, thereby ensuring backward compatibility. Larger bandwidth extension indicates a larger PAPR gain of the OQAM than a QAM. Therefore, a large gain can be obtained by supporting large bandwidth extension, and no modification is made for small bandwidth extension, thereby ensuring backward compatibility. A smaller scheduled bandwidth indicates a larger PAPR gain of the OQAM than a QAM. Therefore, a large gain can be obtained by supporting a narrowband, and no modification is made for a broadband, thereby ensuring backward compatibility. A lower spectral efficiency indicates a larger PAPR gain of the OQAM than a QAM. Therefore, a large gain can be obtained by supporting a low spectral efficiency, and no modification is made for a high spectral efficiency, thereby ensuring backward compatibility. A smaller MCS index indicates a lower spectral efficiency and a larger PAPR gain of the OQAM than a QAM. Therefore, a large gain can be obtained by supporting a low MCS index, and no modification is made for a high MCS index, thereby ensuring backward compatibility. In other words, a lower code rate indicates a lower spectral efficiency and a larger PAPR gain of the OQAM than a QAM. Therefore, a large gain can be obtained by supporting a low code rate, and no modification is made for a high code rate, thereby ensuring backward compatibility.

In a possible implementation of the first aspect, when the threshold of the first parameter meets at least one of the following, the modulation scheme is a QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

In a possible implementation of the first aspect, when the threshold of the modulation order is 1, the threshold of the bandwidth extension is 0, the modulation order is less than or less than or equal to the threshold of the modulation order, and the bandwidth extension is greater than or greater than or equal to the threshold of the bandwidth extension, it is determined that the modulation scheme is the OQAM. In this implementation, the modulation scheme is determined by associating the modulation order with the bandwidth extension, to better support the OQAM.

In a possible implementation of the first aspect, the threshold of the modulation order is 1, the threshold of the bandwidth extension is 0, the modulation order is greater than or equal to or greater than the threshold of the modulation order, the bandwidth extension is less than or equal to or less than the threshold of the bandwidth extension, and it is determined that the modulation scheme is the QAM.

In a possible implementation of the first aspect, the threshold of the modulation order is greater than or equal to 2. In this implementation, when the threshold of the modulation order is greater than or greater than or equal to 2, and the value of the modulation order is less than or less than or equal to the threshold of the modulation order, the OQAM is supported. Compared with the conventional technology, more OQAMs are introduced, to generate signals with a low PAPR.

In a possible implementation of the first aspect, the method further includes: receiving second indication information, where the second indication information indicates a modulation capability supported by the terminal device, and the modulation capability is indicated by at least one of the modulation order, the bandwidth extension, the scheduled bandwidth, the spectral efficiency, the modulation and coding scheme MCS index, and the code rate; and determining the threshold of the first parameter based on the second indication information. In this implementation, the terminal device can report the supported modulation capability, and the network device can set an appropriate threshold of the first parameter based on the capability reported by the terminal device.

In a possible implementation of the first aspect, the method further includes: receiving third indication information, where the third indication information indicates whether the terminal device supports the offset quadrature amplitude modulation OQAM or the quadrature amplitude modulation QAM.

In a possible implementation of the first aspect, the threshold of the first parameter may be directly configured by the network device, or may be predefined in a protocol.

In a possible implementation of the first aspect, the threshold of the first parameter is related to a value of another parameter in the first parameter. For example, the threshold of the modulation order may be related to the value of the bandwidth extension. In this implementation, the threshold of the modulation order is associated with another parameter, so that a gain of each condition can be ensured, the conventional QAM is supported to a maximum extent, and backward compatibility is ensured.

In a possible implementation of the first aspect, the threshold of the modulation order is determined based on at least one of the value of the bandwidth extension, the value of the scheduled bandwidth, the value of the spectral efficiency, the value of the modulation and coding scheme MCS index, or the value of the code rate. In this implementation, the threshold of the modulation order is associated with another parameter, so that a gain of each condition can be ensured, the conventional QAM is supported to a maximum extent, and backward compatibility is ensured.

According to a second aspect, a coding scheme determining method is provided. The method provided in the second aspect may be performed by a terminal device, or may be performed by a chip disposed in the terminal device. This is not limited in this application.

Specifically, the method includes: receiving first indication information, where the first indication information indicates a modulation scheme, the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and performing modulation based on the first indication information.

According to the method provided in the second aspect, the terminal device performs modulation based on the first indication information of a network device. The first indication information is determined based on at least one of a threshold of the modulation order, a threshold of the bandwidth extension, a threshold of the scheduled bandwidth, a threshold of the spectral efficiency, a threshold of the modulation and coding scheme MCS index, and a threshold of the code rate. In this manner, more OQAMs can be introduced, to generate signals with a low PAPR.

In a possible implementation of the second aspect, when the threshold of the first parameter meets at least one of the following, the modulation scheme is an OQAM: a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

In this implementation, a lower modulation order indicates a larger PAPR gain of the OQAM than a QAM. Therefore, a large gain can be obtained by supporting a low-order modulation order, and no modification is made for high-order modulation, thereby ensuring backward compatibility. Larger bandwidth extension indicates a larger PAPR gain of the OQAM than a QAM. Therefore, a large gain can be obtained by supporting large bandwidth extension, and no modification is made for small bandwidth extension, thereby ensuring backward compatibility. A smaller scheduled bandwidth indicates a larger PAPR gain of the OQAM than a QAM. Therefore, a large gain can be obtained by supporting a narrowband, and no modification is made for a broadband, thereby ensuring backward compatibility. A lower spectral efficiency indicates a larger PAPR gain of the OQAM than a QAM. Therefore, a large gain can be obtained by supporting a low spectral efficiency, and no modification is made for a high spectral efficiency, thereby ensuring backward compatibility. A smaller MCS index indicates a lower spectral efficiency and a larger PAPR gain of the OQAM than a QAM. Therefore, a large gain can be obtained by supporting a low MCS index, and no modification is made for a high MCS index, thereby ensuring backward compatibility. In other words, a lower code rate indicates a lower spectral efficiency and a larger PAPR gain of the OQAM than a QAM. Therefore, a large gain can be obtained by supporting a low code rate, and no modification is made for a high code rate, thereby ensuring backward compatibility.

In a possible implementation of the second aspect, when the threshold of the first parameter meets at least one of the following, the modulation scheme is a QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

In a possible implementation of the second aspect, when the threshold of the modulation order is 1, the threshold of the bandwidth extension is 0, the modulation order is less than or less than or equal to the threshold of the modulation order, and the bandwidth extension is greater than or greater than or equal to the threshold of the bandwidth extension, the modulation scheme is the OQAM. In this implementation, the modulation scheme is determined by associating the modulation order with the bandwidth extension, to better support the OQAM.

In a possible implementation of the second aspect, the threshold of the modulation order is 1, the threshold of the bandwidth extension is 0, the modulation order is greater than or equal to or greater than the threshold of the modulation order, the bandwidth extension is less than or equal to or less than the threshold of the bandwidth extension, and it is determined that the modulation scheme is the QAM.

In a possible implementation of the second aspect, the threshold of the modulation order is greater than or equal to 2. In this implementation, when the threshold of the modulation order is greater than or equal to 2, and the value of the modulation order is less than or less than or equal to the threshold of the modulation order, the OQAM is supported. Compared with the conventional technology, more OQAMs are introduced, to generate signals with a low PAPR.

In a possible implementation of the second aspect, the method further includes: sending second indication information, where the second indication information indicates a modulation capability supported by the terminal device, and the modulation capability is indicated by at least one of the modulation order, the bandwidth extension, the scheduled bandwidth, the spectral efficiency, the modulation and coding scheme MCS index, and the code rate; and the threshold of the first parameter is determined based on the second indication information. In this implementation, the terminal device can report the capability supported by the terminal device, so that the network device can properly set the threshold of the first parameter based on the capability supported by the terminal device.

In a possible implementation of the second aspect, the method further includes: sending third indication information, where the third indication information indicates whether the terminal device supports the offset quadrature amplitude modulation OQAM or the quadrature amplitude modulation QAM.

In a possible implementation of the second aspect, the threshold of the modulation order is determined based on at least one of the value of the bandwidth extension, the value of the scheduled bandwidth, the value of the spectral efficiency, the value of the modulation and coding scheme MCS index, or the value of the code rate. In this implementation, the threshold of the modulation order is associated with another parameter, so that a gain of each condition can be ensured, the conventional QAM is supported to a maximum extent, and backward compatibility is ensured.

According to a third aspect, a communication apparatus is provided. The communication apparatus includes:

a processing unit, configured to determine a modulation scheme, where the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and

a sending unit, configured to send first indication information to a terminal device, where the first indication information indicates the modulation scheme.

The communication apparatus provided in the third aspect can determine a signal modulation scheme based on at least one of a specified threshold of the modulation order, a specified threshold of the bandwidth extension, a specified threshold of the scheduled bandwidth, a specified threshold of the spectral efficiency, a specified threshold of the modulation and coding scheme MCS index, and a specified threshold of the code rate, so that more OQAMs can be introduced, to generate signals with a low PAPR.

In a possible implementation of the third aspect, when the threshold of the first parameter meets at least one of the following, the modulation scheme is an OQAM: a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

In this implementation, a lower modulation order indicates a larger PAPR gain of the OQAM than a QAM. Therefore, a large gain can be obtained by supporting a low-order modulation order, and no modification is made for high-order modulation, thereby ensuring backward compatibility. Larger bandwidth extension indicates a larger PAPR gain of the OQAM than a QAM. Therefore, a large gain can be obtained by supporting large bandwidth extension, and no modification is made for small bandwidth extension, thereby ensuring backward compatibility. A smaller scheduled bandwidth indicates a larger PAPR gain of the OQAM than a QAM. Therefore, a large gain can be obtained by supporting a narrowband, and no modification is made for a broadband, thereby ensuring backward compatibility. A lower spectral efficiency indicates a larger PAPR gain of the OQAM than a QAM. Therefore, a large gain can be obtained by supporting a low spectral efficiency, and no modification is made for a high spectral efficiency, thereby ensuring backward compatibility. A smaller MCS index indicates a lower spectral efficiency and a larger PAPR gain of the OQAM than a QAM. Therefore, a large gain can be obtained by supporting a low MCS index, and no modification is made for a high MCS index, thereby ensuring backward compatibility. In other words, a lower code rate indicates a lower spectral efficiency and a larger PAPR gain of the OQAM than a QAM. Therefore, a large gain can be obtained by supporting a low code rate, and no modification is made for a high code rate, thereby ensuring backward compatibility.

In a possible implementation of the third aspect, when the threshold of the first parameter meets at least one of the following, the modulation scheme is a QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

In a possible implementation of the third aspect, when the threshold of the modulation order is 1, the threshold of the bandwidth extension is 0, the modulation order is less than or less than or equal to the threshold of the modulation order, and the bandwidth extension is greater than or greater than or equal to the threshold of the bandwidth extension, the modulation scheme is the OQAM. In this implementation, the modulation scheme is determined by associating the modulation order with the bandwidth extension, to better support the OQAM.

In a possible implementation of the third aspect, the threshold of the modulation order is 1, the threshold of the bandwidth extension is 0, the modulation order is greater than or equal to or greater than the threshold of the modulation order, the bandwidth extension is less than or equal to or less than the threshold of the bandwidth extension, and it is determined that the modulation scheme is the QAM.

In a possible implementation of the third aspect, the threshold of the modulation order is greater than or equal to 2. In this implementation, when the threshold of the modulation order is greater than or equal to 2, and the value of the modulation order is less than or less than or equal to the threshold of the modulation order, the OQAM is supported. Compared with the conventional technology, more OQAMs are introduced, to generate signals with a low PAPR.

In a possible implementation of the third aspect, the apparatus further includes a receiving unit, where the receiving unit is configured to receive second indication information, the second indication information indicates a modulation capability supported by the terminal device, and the modulation capability is indicated by at least one of the modulation order, the bandwidth extension, the scheduled bandwidth, the spectral efficiency, the modulation and coding scheme MCS index, and the code rate; and the threshold of the first parameter is determined based on the second indication information. In this implementation, the terminal device can report the supported modulation capability, and a network device can set an appropriate threshold of the first parameter based on the capability reported by the terminal device.

In a possible implementation of the third aspect, the receiving unit is further configured to receive third indication information, where the third indication information indicates whether the terminal device supports the offset quadrature amplitude modulation OQAM or the quadrature amplitude modulation QAM.

In a possible implementation of the third aspect, the threshold of the first parameter may be directly configured by the network device, or may be predefined in a protocol.

In a possible implementation of the third aspect, the threshold of the modulation order is determined based on at least one of the value of the bandwidth extension, the value of the scheduled bandwidth, the value of the spectral efficiency, the value of the modulation and coding scheme MCS index, or the value of the code rate. In this implementation, the threshold of the modulation order is associated with another parameter, so that a gain of each condition can be ensured, the conventional QAM is supported to a maximum extent, and backward compatibility is ensured.

According to a fourth aspect, a communication apparatus is provided. The communication apparatus includes:

a receiving unit, where the receiving unit is configured to receive first indication information, where the first indication information indicates a modulation scheme, the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and
a processing unit, where the processing unit is configured to perform modulation or demodulation based on the first indication information.

The apparatus provided in the fourth aspect can perform modulation based on the first indication information of a network device. The first indication information is determined based on at least one of a threshold of the modulation order, a threshold of the bandwidth extension, a threshold of the scheduled bandwidth, a threshold of the spectral efficiency, a threshold of the modulation and coding scheme MCS index, and a threshold of the code rate. In this manner, more OQAMs can be introduced, to generate signals with a low PAPR.

In a possible implementation of the fourth aspect, when the threshold of the first parameter meets at least one of the following, the modulation scheme is an OQAM: a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

In this implementation, a lower modulation order indicates a larger PAPR gain of the OQAM than a QAM. Therefore, a large gain can be obtained by supporting a low-order modulation order, and no modification is made for high-order modulation, thereby ensuring backward compatibility. Larger bandwidth extension indicates a larger PAPR gain of the OQAM than a QAM. Therefore, a large gain can be obtained by supporting large bandwidth extension, and no modification is made for small bandwidth extension, thereby ensuring backward compatibility. A smaller scheduled bandwidth indicates a larger PAPR gain of the OQAM than a QAM. Therefore, a large gain can be obtained by supporting a narrowband, and no modification is made for a broadband, thereby ensuring backward compatibility. A lower spectral efficiency indicates a larger PAPR gain of the OQAM than a QAM. Therefore, a large gain can be obtained by supporting a low spectral efficiency, and no modification is made for a high spectral efficiency, thereby ensuring backward compatibility. A smaller MCS index indicates a lower spectral efficiency and a larger PAPR gain of the OQAM than a QAM. Therefore, a large gain can be obtained by supporting a low MCS index, and no modification is made for a high MCS index, thereby ensuring backward compatibility. In other words, a lower code rate indicates a lower spectral efficiency and a larger PAPR gain of the OQAM than a QAM. Therefore, a large gain can be obtained by supporting a low code rate, and no modification is made for a high code rate, thereby ensuring backward compatibility.

In a possible implementation of the fourth aspect, when the threshold of the first parameter meets at least one of the following, the modulation scheme is a QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

In a possible implementation of the fourth aspect, when the threshold of the modulation order is 1, the threshold of the bandwidth extension is 0, the modulation order is less than or less than or equal to the threshold of the modulation order, and the bandwidth extension is greater than or greater than or equal to the threshold of the bandwidth extension, the modulation scheme is the OQAM. In this implementation, the modulation scheme is determined by associating the modulation order with the bandwidth extension, to better support the OQAM.

In a possible implementation of the fourth aspect, the threshold of the modulation order is 1, the threshold of the bandwidth extension is 0, the modulation order is greater than or equal to or greater than the threshold of the modulation order, the bandwidth extension is less than or equal to or less than the threshold of the bandwidth extension, and the modulation scheme is the QAM.

In a possible implementation of the fourth aspect, the threshold of the modulation order is greater than or equal to 2. In this implementation, when the threshold of the modulation order is greater than or greater than or equal to 2, and the value of the modulation order is less than or less than or equal to the threshold of the modulation order, the OQAM is supported. Compared with the conventional technology, more OQAMs are introduced, to generate signals with a low PAPR.

In a possible implementation of the fourth aspect, the apparatus further includes a sending unit, configured to send second indication information, where the second indication information indicates a modulation capability supported by a terminal device, and the modulation capability is indicated by at least one of the modulation order, the bandwidth extension, the scheduled bandwidth, the spectral efficiency, the modulation and coding scheme MCS index, and the code rate; and the threshold of the first parameter is determined based on the second indication information. In this implementation, the apparatus can report the modulation capability supported by the terminal device, and the network device can set an appropriate threshold of the first parameter based on the capability reported by the terminal device.

In a possible implementation of the fourth aspect, the sending unit is further configured to send third indication information, where the third indication information indicates whether the terminal device supports the offset quadrature amplitude modulation OQAM or the quadrature amplitude modulation QAM.

In a possible implementation of the fourth aspect, the threshold of the first parameter may be directly configured by the network device, or may be predefined in a protocol.

In a possible implementation of the fourth aspect, the threshold of the first parameter is related to a value of another parameter in the first parameter. For example, the threshold of the modulation order may be related to the value of the bandwidth extension. In this implementation, the threshold of the modulation order is associated with another parameter, so that a gain of each condition can be ensured, the conventional QAM is supported to a maximum extent, and backward compatibility is ensured.

According to a fifth aspect, a communication apparatus is provided. The communication apparatus includes at least one processor and a memory. The processor is coupled to the memory, and the memory stores program instructions. When the program instructions stored in the memory are executed by the processor, the method according to the first aspect or any one of the possible implementations of the first aspect is performed.

According to a sixth aspect, a communication apparatus is provided. The communication apparatus includes at least one processor and an interface circuit. The at least one processor is configured to perform the method according to the first aspect or any one of the possible implementations of the first aspect.

According to a seventh aspect, a terminal device is provided. The terminal device includes the communication apparatus provided in the fourth aspect, or the terminal device includes the communication apparatus provided in the fifth aspect, or the terminal device includes the communication apparatus provided in the sixth aspect.

According to an eighth aspect, a network device is provided. The network device includes the communication apparatus provided in the third aspect, or the network device includes the communication apparatus provided in the fifth aspect, or the network device includes the communication apparatus provided in the sixth aspect.

According to a ninth aspect, a computer program product is provided. The computer program product includes a computer program. When being executed by a processor, the computer program is used to perform the method according to the first aspect or any one of the possible implementations of the first aspect, or configured to perform the method according to the second aspect or any one of the possible implementations of the second aspect.

According to a tenth aspect, a computer-readable storage medium is provided. The computer-readable storage medium stores a computer program. When the computer program is executed, the method according to the first aspect or any one of the possible implementations of the first aspect is performed, or the method according to the second aspect or any one of the possible implementations of the second aspect is performed.

According to an eleventh aspect, a chip is provided. The chip includes a processor, configured to: invoke a computer program from a memory and run the computer program, so that a communication device on which the chip is installed is configured to perform the method according to the first aspect or any one of the possible implementations of the first aspect, or is configured to perform the method according to the second aspect or any one of the possible implementations of the second aspect.

According to a twelfth aspect, a communication system is provided. The communication system includes the foregoing terminal device and the foregoing network device.

## BRIEF DESCRIPTION OF DRAWINGS

FIG. 1 is a diagram of an amplitude change of a discrete signal;

FIG. 2 is a diagram of a change of a signal on a carrier in a multi-carrier OFDM system;

FIG. 3 is a diagram of BPSK modulation;

FIG. 4 is a diagram of a 16QAM;

FIG. 5 is a diagram of an example communication system according to an embodiment of this application;

FIG. 6 is a diagram of a structure of a network device 60 and a structure of a terminal device 70 according to an embodiment of this application;

FIG. 7 is a schematic interaction diagram of an example coding scheme determining method 700 according to an embodiment of this application;

FIG. 8 is a block diagram of a communication apparatus 800 according to an embodiment of this application;

FIG. 9 is a block diagram of another example communication apparatus 900 according to an embodiment of this application;

FIG. 10 is a block diagram of a communication apparatus 1000 according to an embodiment of this application;

FIG. 11 is a block diagram of another example communication apparatus 1100 according to an embodiment of this application;

FIG. 12 is a diagram of a structure of a terminal device 1200 according to this application;

FIG. 13 is a diagram of a structure of a network device 1300 according to this application; and

FIG. 14 is a diagram of a chip system according to an embodiment of this application.

## DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a future evolved communication system (for example, 6G).

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved network, or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in 5G network, a network device in a future evolved network, or the like. This is not limited in embodiments of this application.

In embodiments of this application, the terminal device or the network device may include a hardware layer, and optionally, may further include a software layer running on the hardware layer. The hardware layer may include a processor, and may further include hardware such as a memory management unit (memory management unit, MMU) or a memory (also referred to as a main memory). The software layer stores computer instructions that facilitate implementation of the methods according to embodiments of this application. A specific structure or level of an execution body of a method provided in embodiments of this application is not particularly limited in embodiments of this application. As long as the execution body can communicate based on the method provided in embodiments of this application by running a program that records a code of the method provided in embodiments of this application, it can be considered as a terminal device or network device implementing embodiments of this application. For example, the execution body of the method provided in embodiments of this application may be a communication module (for example, a modem (modem)), a system-on-chip SoC, or another functional module in the terminal device or the network device.

In addition, various aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

Peak to average power ratio (peak to average power ratio, PAPR): When observed in time domain, a radio signal is sinusoidal wave whose amplitude varies rather than remain constant. A peak amplitude within one cycle differs from that in other cycles, so average power and peak power also different from cycle to cycle. Over a long period of time, the peak power is maximum transient power that occurs at a probability, which is only 0.01%. A ratio of the peak power to total average power of the signal at the probability is the peak to average power ratio of a system.

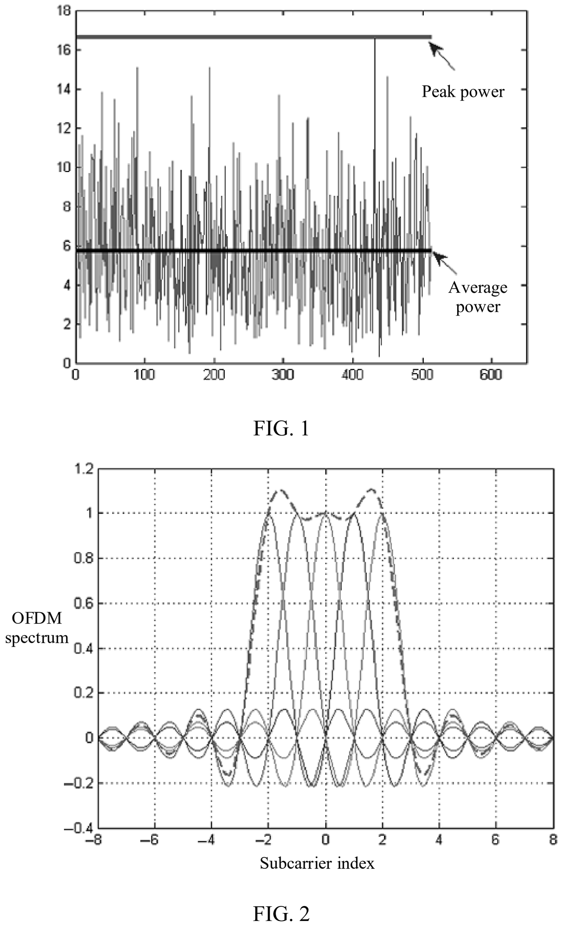

FIG. 1 is a diagram of an amplitude change of a discrete signal. As shown in FIG. 1, peak power and average power of a system are included. The peak to average power ratio of the system are affected by the two factors: a peak to average power ratio of a baseband signal and a peak to average power ratio brought by multi-carrier power superposition.

For example, for a baseband signal that uses a 1024 quadrature amplitude modulation (1024 quadrature amplitude modulation, 1024QAM), a peak to average power ratio of the baseband signal is high. For a baseband signal that uses quadrature phase shift keying (quadrature phase shift keying, QPSK), binary phase shift keying (Binary Phase Shift Keying, BPSK), or the like for modulation and whose signal energy is 1, the diagram of the amplitude change of the discrete signal shown in FIG. 1 may be obtained by superposing a plurality of baseband signals. It should be noted that, for QPSK and BPSK, it may be understood as that a signal amplitude is constant and only a phase is changed.

For another example, a multi-carrier waveform modulation scheme is OFDM. FIG. 2 is a diagram of a change of a signal on a carrier in a multi-carrier OFDM system. As shown in FIG. 2, the signal on the carrier is represented as a sinc (sinc) function, and the signal has tails on left and right sides, and tails of a plurality of carriers may be superposed at a remote location at a specific probability to form a point with high peak power.

It should be noted that, when a signal of a communication system is sent to a remote location, power amplification needs to be performed. Due to technical and cost limitations, a power amplifier typically operates with linear amplification only within a range. Exceeding this range causes signal distortion. Such distortion causes failing to correctly parse the signal by a receiver end. To ensure that a peak of the signal is still within a linear range of the power amplifier, average power of the signal needs to be reduced. However, reducing the average power of the signal causes reduction in an efficiency of the power amplifier, or may be described as reduction in a coverage area of the power amplifier. Therefore, to meet coverage requirements, there is a need for selection of a signal generation technology with a low PAPR.

The following describes a modulation scheme of a transmitted signal.

In a communication system, information (for example, a signal) that needs to be transmitted is typically represented by bits "0" and "1". However, a radio signal is usually an analog signal with a frequency, an amplitude, and a phase. Therefore, an information bit needs to be carried in the radio signal through modulation.

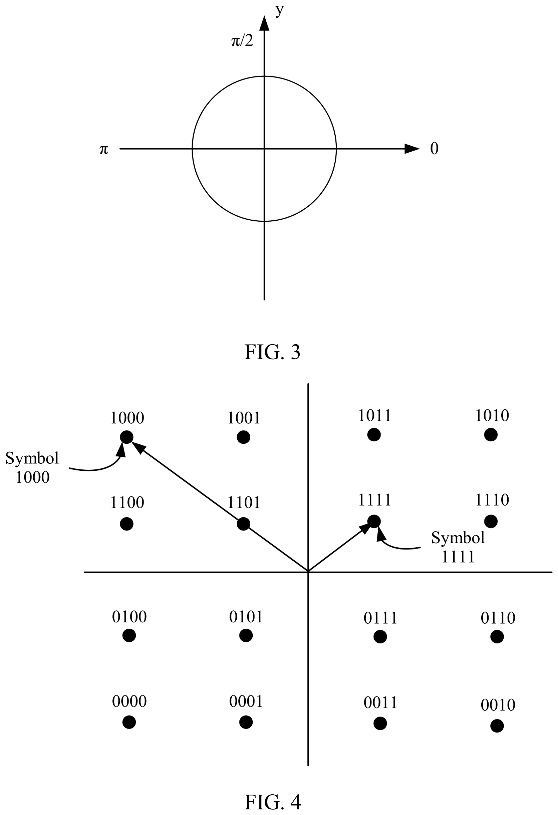

A simplest modulation scheme is BPSK. FIG. 3 is a diagram of BPSK modulation. As shown in FIG. 3, a phase of an information bit 1 is 0, and a phase of an information bit 0 is $\pi$. A signal is only on a real axis. If information bits of 10111 are input, a corresponding sine wave is transmitted. It is noted that a location of the information bit "0" corresponds to a sine start phase $\pi$.

It should be noted that an amplitude of BPSK can be fixed at 1 after normalization. If the amplitude is also allowed to vary, a more richer modulated constellation diagram may be obtained, for example, QPSK, 16QAM, 64QAM, 256QAM, or 1024QAM. This is not limited.

For example, FIG. 4 is a diagram of a 16QAM. As shown in FIG. 4, one point (which may alternatively be described as one symbol) in the figure may correspond to four information bits, that is, the 16QAM has $2^4=16$ symbols, and each symbol has an amplitude and a phase of the symbol. It should be noted that, there may be a plurality of amplitudes in 16QAM, and phases of all symbol are different from each other.

A signal transmitted by using conventional QAM is I+jQ, and information is carried by using amplitudes of a real part I and an imaginary part Q. For example, a quantity of available values of I or Q may be 2 for quadrature phase shift keying 4QAM (that is, QPSK, carrying 2-bit information). A quantity of available values of I or Q for 16QAM (carrying 4 bits) is 4.

For an offset quadrature amplitude modulation (offset quadrature amplitude modulation, OQAM), a transmitted signal is a signal whose real part is separated from an imaginary part, that is, I, jQ, I, jQ, ..., or jQ, I, jQ, I, ..., that is, real and imaginary signals are crossed. It may also be understood as that one QAM symbol is split into two OQAM symbols: a real symbol and an imaginary symbol that are crossed. When the quantity of available values of I or Q is 2, the modulation is also referred to as pi/2 BPSK modulation. Compared with BPSK modulation, in this modulation, each symbol has a phase offset of pi/2 relative to a previous symbol on the basis of BPSK modulation.

On the basis of the QAM or the OQAM, a specific phase shift may be further performed, that is, an $n^{th}$ symbol is multiplied by a phase (QAM/OQAM symbol $Xe^{j2\pi n\alpha}$, where $\alpha$ is a phase shift coefficient), which is referred to as a rotated QAM or an OQAM. Specifically, pi/2 BPSK modulation may also be referred to as pi/2-rotated BPSK modulation.

In an example related technology, in a case of no spectrum spread, if there are N QAM symbols or there are a total quantity N of QAM symbols and reference signals, or there are 2N OQAM symbols (which are equivalent to N QAM symbols) or there are a total quantity 2N of OQAM symbols and reference signals, N subcarriers are correspondingly allocated for transmission. A lower PAPR or a lower block error ratio (Block Error Ratio, BLER) can be obtained through the spectrum spread, that is, by increasing a quantity of transmitted subcarriers. However, in this manner, more frequency resources are used. As a result, a spectral efficiency is reduced. A size of the spectrum spread is generally represented by a roll-off factor (roll-off factor) or a spectrum extension factor (spectrum extension factor).

The following describes a modulation and coding scheme (modulation and coding scheme, MCS) table used for signal transmission in 5G new radio (new radio, NR).

Table 1 5G NR MCS table

| MCS index $I_{MCS}$ | Modulation order Qm | Target code rate R×1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6039 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |

(continued)

| MCS index $I_{MCS}$ | Modulation order Qm | Target code rate R×1024 | Spectral efficiency |
|---|---|---|---|
| 27 | 6 | 948 | 5.5547 |
| 28 | q | reserved | |
| 29 | 2 | reserved | |
| 30 | 4 | reserved | |
| 31 | 6 | reserved | |

In transmission defined in NR, a network device indicates an MCS index to a terminal device, and corresponding to the foregoing table, indicates transmission information used for uplink or downlink transmission. As shown in the table, there are 32 MCS indexes corresponding to 5 bits.

The foregoing table is an MCS table defined in a protocol. The 1st column represents an MCS index, and the 2nd column represents a modulation order, that is, a quantity of bits carried in a modulated symbol. For example, when I_MCS is set to 0 and 1, the modulation order is q=1, representing that Pi/2 BPSK transmission is used for transmission. When I_MCS is set to 2 to 8, QPSK constellation transmission with a modulation order being 2 is used for transmission. When I_MCS is set to 9 to 16, 16QAM constellation transmission with a modulation order being 4 is used for transmission. When I_MCS is set to 17 to 27, 64QAM constellation transmission with a modulation order being 6 is used for transmission.

The 3rd column in the table represents a target code rate corresponding to transmission, and a value in the table divided by 1024 is a used code rate of channel coding. For example, when I_MCS is set to 0, an expected code rate is 240/1/1024=0.234375. When I_MCS is set to 1, an expected code rate is 314/1/1024=0.306640. In this case, a receiver performs decoding via a corresponding decoder.

The 4th column in the table represents spectral efficiency (Spectral efficiency, SE) corresponding to transmission. Generally, the spectral efficiency is the code rate in the 3rd column divided by 1024 and multiplied by the modulation order in the 2nd column. For example, when I_MCS is set to 0, an expected code rate is 240/1/1024×1=0.234375, which is approximately equal to 0.2344.

Currently, only the OQAM of pi/2 BPSK is supported. For the modulation order being 2 or greater than 2, only the QAM is supported. However, the OQAM can obtain a lower PAPR than the QAM. Therefore, to generate signals with a low PAPR, more MCSs for the OQAM need to be introduced.

In view of this, this application provides a coding scheme determining method. The method includes: A network device determines a modulation scheme based on a threshold of a first parameter, where the first parameter includes a modulation order, bandwidth extension, scheduled bandwidth, spectral efficiency, an MCS, a code rate, and the like; the network device sends the determined modulation scheme to a terminal device; and the terminal device performs demodulation based on the indicated modulation scheme. In this method, more OQAMs can be introduced, and finally a signal with a low PAPR is generated.

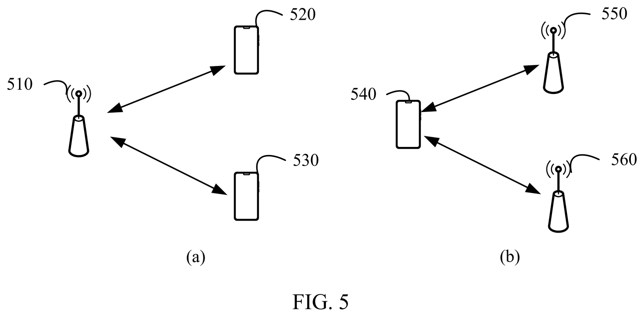

For ease of understanding embodiments of this application, a communication system to which embodiments of this application are applicable is first described with reference to FIG. 5.

FIG. 5 is a diagram of an example communication system according to an embodiment of this application. As shown in (a) in FIG. 5, the communication system includes three communication devices, for example, a network device 510, a terminal device 520, and a terminal device 530. Data communication may be performed between the network device 510 and at least one of the terminal device 520 and the terminal device 530. For example, the network device 510 may send first indication information to the terminal device 520 or the terminal device 530 by using the coding scheme determining method provided in this application. Certainly, the terminal device 520 or the terminal device 530 may alternatively transmit second indication information and third indication information to the network device 510 by using the method provided in this application. As shown in (b) in FIG. 5, the communication system includes a terminal device 540, a network device 550, and a network device 560. In other words, one terminal device may transmit a signal to a plurality of network devices by using the method provided in this application.

It should be understood that the communication system shown in FIG. 5 may further include more network nodes, for example, terminal devices or network devices. The network devices or the terminal devices included in the communication system shown in FIG. 5 may be the network devices or the terminal devices in the foregoing various forms. Details are not shown one by one in the figure in this embodiment of this application.

In some embodiments, the network device and the terminal device mentioned above may also be referred to as communication apparatuses, and may be a general-purpose device or a dedicated device. This is not specifically limited in embodiments of this application.

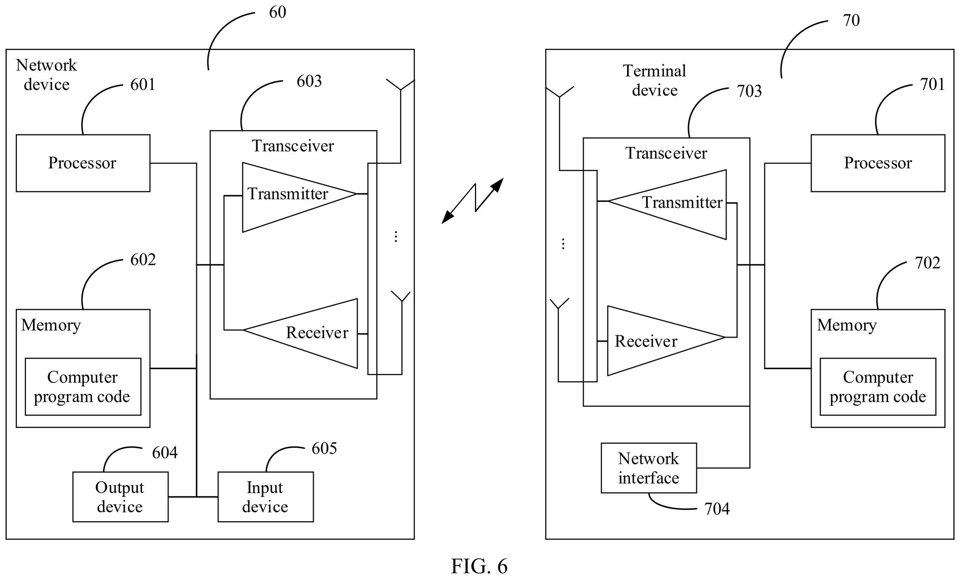

FIG. 6 is a diagram of a structure of a network device 60 and a structure of a terminal device 70 according to an embodiment of this application.

The network device 60 includes at least one processor (an example in which the network device 60 includes one processor 601 is used for description in FIG. 6) and at least one transceiver (an example in which the network device 60 includes one transceiver 603 is used for description in FIG. 6). Further, the network device 60 may further include at least one memory (an example in which the network device 60 includes one memory 602 is used for description in FIG. 6), at least one output device (an example in which the network device 60 includes one output device 604 is used for description in FIG. 6), and at least one input device (an example in which the network device 60 includes one input device 605 is used for description in FIG. 6).

The processor 601, the memory 602, and the transceiver 603 are connected to each other through a communication line. The communication line may include a path for transmission of information between the foregoing components.

The processor 601 may be a general-purpose central processing unit (central processing unit, CPU), a microprocessor, an application-specific integrated circuit (application-specific integrated circuit, ASIC), or one or more integrated circuits configured to control program execution of the solutions of this application. During specific implementation, in an embodiment, the processor 601 may alternatively include a plurality of CPUs, and the processor 601 may be a single-core (single-CPU) processor or a multi-core (multi-CPU) processor. The processor herein may refer to one or more devices, circuits, or processing cores configured to process data (for example, computer program instructions).

The memory 602 may be an apparatus having a storage function. For example, the memory 602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 602 may exist independently, and is connected to the processor 601 through the communication line. Alternatively, the memory 602 may be integrated with the processor 601.

The memory 602 is configured to store computer-executable instructions for performing the solutions of this application, and the processor 601 controls execution. Specifically, the processor 601 is configured to execute the computer-executable instructions stored in the memory 602, to implement methods in embodiments of this application.

Alternatively, in this application, the processor 601 may perform a processing-related function in signal sending and receiving methods provided in this application, and the transceiver 603 is responsible for communicating with another device or a communication network. This is not specifically limited in embodiments of this application.

The computer-executable instructions in this application may also be referred to as application program code or computer program code. This is not specifically limited in embodiments of this application.

The transceiver 603 may be any apparatus like a transceiver, and is configured to communicate with another device or a communication network, such as the Ethernet, a radio access network (radio access network, RAN), or a wireless local area network (wireless local area network, WLAN). The transceiver 603 includes a transmitter (transmitter, Tx) and a receiver (receiver, Rx).

The output device 604 communicates with the processor 601, and may display information in a plurality of manners. For example, the output device 604 may be a liquid crystal display (liquid crystal display, LCD), a light emitting diode (light emitting diode, LED) display device, a cathode ray tube (cathode ray tube, CRT) display device, or a projector (projector).

The input device 605 communicates with the processor 601, and may receive user input in a plurality of manners. For example, the input device 605 may be a mouse, a keyboard, a touchscreen device, or a sensor device.

The terminal device 70 includes at least one processor (an example in which the terminal device 70 includes one processor 701 is used for description in FIG. 6) and at least one transceiver (an example in which the terminal device 70 includes one transceiver 703 is used for description in FIG. 6). Further, the terminal device 70 may further include at least one memory (an example in which the terminal device 70 includes one memory 702 is used for description in FIG. 6) and at least one network interface (an example in which the terminal device 70 includes one network interface 704 is used for description in FIG. 6). The processor 701, the memory 702, the transceiver 703, and the network interface 704 are connected to each other through a communication line. The network interface 704 is configured to connect to a core network device through a link, or connect to a network interface of another network device through a wired or wireless link (not shown in FIG. 6). This is not specifically limited in embodiments of this application. In addition, for related descriptions of the processor 701, the memory 702, and the transceiver 703, refer to the descriptions of the processor 601, the memory 602, and the transceiver 603 in the network device 60. Details are not described herein again.

It may be understood that the structures shown in FIG. 6 do not constitute a specific limitation on the network device 60 and the terminal device 70. For example, in some other embodiments of this application, the network device 60 and the terminal device 70 may include more or fewer components than those shown in the figure, or combine some of the components, or split some of the components, or have different layouts of the components. The components shown in the figure may be implemented by hardware, software, or a combination of software and hardware.

With reference to the accompanying drawings, the following describes in detail the coding scheme determining method provided in embodiments of this application by using an example in which the network device 60 shown in FIG. 6 interacts with any terminal device 70.

It should be noted that a name of a message (or information), a name of a parameter in the message (or information), or the like in the following embodiments of this application is merely an example, and may be another name during specific implementation. This is not specifically limited in embodiments of this application.

It may be understood that, in embodiments of this application, the terminal device and/or the network device may perform a part or all of steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application may be necessarily performed.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

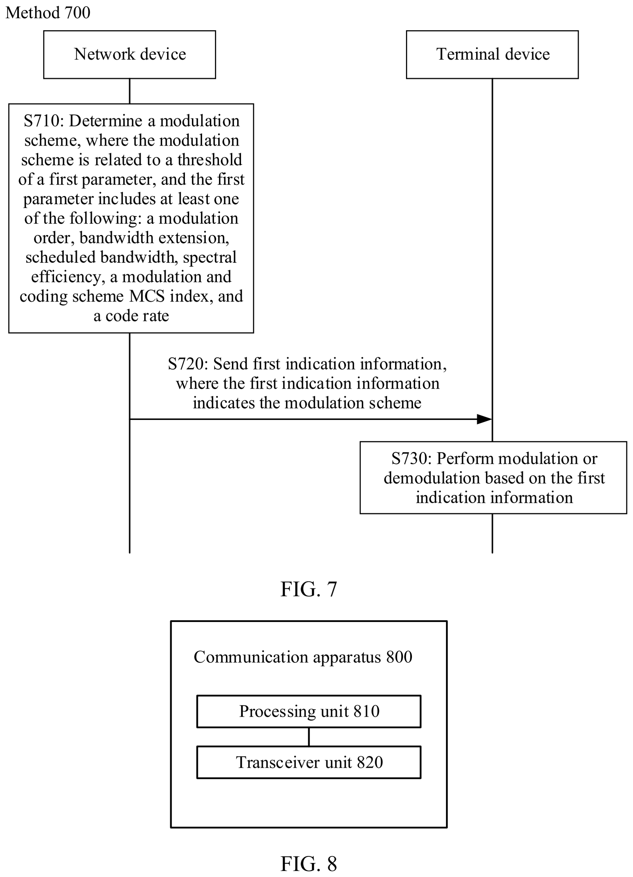

The following describes in detail a coding method provided in this application with reference to FIG. 7.

FIG. 7 is a schematic interaction diagram of an example coding scheme determining method 700 according to an embodiment of this application. The method 700 may be applied to the foregoing scenario, and certainly may alternatively be applied to another communication scenario. This is not limited in embodiments of this application.

It should be understood that, in this embodiment of this application, the method 700 is described by using an example in which the steps in the method 700 are performed by a terminal device and a network device. As an example instead of a limitation, the steps in the method 700 may alternatively be performed by a chip used in terminal device and a chip used in a network device.

As shown in FIG. 7, the method 700 includes the following steps.

S710: A network device determines a modulation scheme, where the modulation scheme is related to a threshold of a first parameter, and the first parameter includes at least one of the following: a modulation order, bandwidth extension, scheduled bandwidth, spectral efficiency, an MCS index, and a code rate.

It can be learned from the MCS table 1 that the modulation scheme may be represented by the modulation order, the bandwidth extension, the scheduled bandwidth, the spectral efficiency, the MCS index, and the code rate. In this case, in this embodiment of this application, to introduce more OQAMs, the network device may dynamically determine the modulation scheme based on the threshold of the first parameter. The modulation scheme includes a QAM and an OQAM.

It should be understood that the foregoing example of the first parameter does not constitute any limitation on the first parameter. The first parameter may further include another parameter related to the modulation scheme. This is not limited in embodiments of this application.

In some embodiments, when the threshold of the first parameter meets at least one of the following, the modulation scheme is the OQAM: a value of the modulation order is less than or less than or equal to a threshold of the modulation order, a value of the bandwidth extension is greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

In some other embodiments, when the threshold of the first parameter meets at least one of the following, the modulation scheme is the QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

It should be understood that the threshold of each parameter in the first parameter may be directly configured by the network device, or may be predefined in a protocol. This is not limited in embodiments of this application.

The following specifically describes how to determine, based on the threshold of the modulation order, the threshold of the bandwidth extension, the threshold of the scheduled bandwidth, the threshold of the spectral efficiency, the threshold of the MCS index, and the threshold of the code rate, whether to use the OQAM or the QAM.

In a possible implementation, based on the MCS table in Table 1, it can be learned that when the I_MCS is set to 0 and 1, the modulation order q is 1; and when the I_MCS is set to 2 to 31, the modulation order is 2 or greater than 2. Currently, only an OQAM when q=1 is supported, and a QAM is supported when the modulation order is 2 or greater than 2.

In this case, in this embodiment of this application, to introduce more OQAMs, the network device may set more modulation orders to 1.

For example, Table 2 shows an example MCS table provided in this embodiment of this application.

Table 2 MCS table

| MCS index $I_{MCS}$ | Modulation order Qm | Target code rate R×1024 | Spectral efficiency |
|---|---|---|---|
| 0 | 1 | 120 | 0.2344 |
| 1 | 1 | 157 | 0.3066 |
| 2 | 1 | 193 | 0.3770 |
| 3 | 1 | 251 | 0.4902 |
| 4 | 1 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 251 | 0.4902 |

Compared with Table 1, in Table 2, when the I_MCS is set to 0 to 4, the modulation order q=1, that is, a quantity of modulation orders being 1 is greater than 2. Therefore, when only the OQAM with the modulation order being 1 is supported currently, more OQAMs can be introduced, to generate signals with a low PAPR.

In another possible implementation, the network device may further set the threshold of the modulation order. When the value of the modulation order is less than or equal to the threshold of the modulation order, the modulation scheme is the OQAM; or when the value of the modulation order is greater than the threshold of the modulation order, the modulation scheme is the QAM.

Alternatively, when the value of the modulation order is less than the threshold of the modulation order, the modulation scheme is the OQAM; or when the value of the modulation order is greater than or equal to the threshold of the modulation order, the modulation scheme is the QAM.

For example, in the foregoing MCS table 1, the OQAM is supported when the modulation order is 1, and the QAM is supported when the modulation order is 2 or greater than 2. In this case, the network device may set the threshold of the modulation order to be greater than or equal to 2, and use the OQAM when the value of the modulation order is less than or less than or equal to the threshold of the modulation order, or use the QAM is when the value of the modulation order is greater than or equal to or greater than 2.

It should be noted that, in this embodiment of this application, the threshold of the modulation order may be set based on a specific situation. This is not limited in embodiments of this application. For example, the threshold of the modulation order may be but is not limited to 2, 4, 6, or the like.

For example, the network device may set the threshold of the modulation order to 2. When the value of the modulation order is less than or less than or equal to 2, it represents that the OQAM can be supported; or when the value of the modulation order is greater than or equal to or greater than 2, it represents that the QAM can be supported. With reference to Table 2 and Table 1, it can be learned that more OQAMs are introduced.

A lower modulation order indicates a larger PAPR gain of the OQAM than the QAM. Therefore, in this implementation, a large gain can be obtained by changing low-order modulation to the OQAM (for example, the network device changes a modulation scheme used when the modulation order is less than or less than or equal to 2 to the OQAM), and no modification is made for high-order modulation, thereby ensuring backward compatibility.

In some other embodiments, the network device may further determine the modulation scheme by setting the threshold of the bandwidth extension. When the value of the bandwidth extension is greater than or equal to the threshold of the bandwidth extension, the OQAM is used; or when the value of the bandwidth extension is less than the threshold of the bandwidth extension, the QAM is used.

Alternatively, when the value of the bandwidth extension is greater than the threshold of the bandwidth extension, the OQAM is used; or when the value of the bandwidth extension is less than or equal to the threshold of the bandwidth extension, the QAM is used.

It should be noted that, in this embodiment of this application, the threshold of the bandwidth extension may be set based on a specific situation. This is not limited in embodiments of this application.

For example, Table 3 shows another example MCS table provided in this embodiment of this application.

Table 3 MCS table

| MCS index $I_{MCS}$ | Modulation order Qm | Target code rate $R \times 1024$ | Spectral efficiency |
|---|---|---|---|
| 0 | 1 | 120 | $0.2344 \times z$ |
| 1 | 1 | 157 | $0.3066 \times z$ |
| 2 | 2 | 193 | $0.3770 \times z$ |
| 3 | 2 | 251 | $0.4902 \times z$ |
| 4 | 2 | 308 | $0.6016 \times z$ |
| 5 | 2 | 379 | $0.7402 \times z$ |
| 6 | 2 | 449 | $0.8770 \times z$ |
| 7 | 2 | 526 | $1.0273 \times z$ |
| 8 | 2 | 602 | $1.1758 \times z$ |
| 9 | 2 | 679 | $1.3262 \times z$ |

As shown in Table 3, z represents a spectral efficiency change caused by bandwidth extension, where $z = \frac{1}{1+\alpha}$ or $z = (1 - \beta)$, $\alpha$ represents a roll-off factor, and $\beta$ represents a spectrum extension factor. It can be learned from Table 3 that the spectral efficiency changes after bandwidth extension, and the network device may determine a change of the spectral efficiency based on a size of the bandwidth extension.

For example, the roll-off factor is defined as signal transmission bandwidth/signal Nyquist bandwidth-1, or signal transmission bandwidth/symbol rate-1, and quantity of transmitted subcarriers/quantity of symbols-1. The spectrum extension factor may be (signal transmission bandwidth-signal Nyquist bandwidth)/signal transmission bandwidth, or (signal transmission bandwidth-symbol rate)/signal transmission bandwidth, or (quantity of transmitted subcarriers-quantity of symbols)/quantity of transmitted subcarriers, or (bandwidth after bandwidth extension-bandwidth before bandwidth extension)/bandwidth after bandwidth extension. The quantity of symbols is a quantity of corresponding QAM symbols or a quantity of QAM symbols plus a quantity of reference signals. Specifically, two OQAM symbols correspond to one QAM symbol.

For example, the value of the bandwidth extension is 0, and correspondingly, $z = 1$, that is, $\alpha = 0$, and $\beta = 0$. For example, N QAM symbols correspond to N subcarriers, or 2N OQAM symbols correspond to N subcarriers. The value of the bandwidth extension is 1, and correspondingly, z=1/2, that is, a=1, and β=1/2. For example, N OQAM symbols correspond to N subcarriers.

In this embodiment of this application, when the value of the bandwidth extension is greater than or greater than or equal to the threshold of the bandwidth extension, the OQAM is used when q=1, and the OQAM may also be used when q=2; or when the value of the bandwidth extension is less than or equal to or less than the threshold of the bandwidth extension, the QAM is used when q=2.

For example, the network device may set the threshold of the bandwidth extension to 0. In this case, when the bandwidth extension is greater than or greater than or equal to 0, the OQAM is used; or when the bandwidth extension is less than or equal to or less than 0, the QAM is used.

Larger bandwidth extension indicates a larger PAPR gain of the OQAM than the QAM. Therefore, in this implementation, a large gain can be obtained by changing a modulation scheme with large bandwidth extension to the OQAM (for example, the network device may set that the OQAM is supported when the bandwidth extension is greater than or equal to 0), and no modification is made for small bandwidth extension (for example, when the bandwidth extension is less than 0, no modification is made for the corresponding QAM), thereby ensuring backward compatibility.

In some other embodiments, the network device may further determine the modulation scheme by setting the threshold of the scheduled bandwidth. When the value of the scheduled bandwidth is less than or equal to the threshold of the scheduled bandwidth, the OQAM is used; or when the value of the scheduled bandwidth is greater than the threshold of the scheduled bandwidth, the QAM is used.

Alternatively, when the value of the scheduled bandwidth is less than the threshold of the scheduled bandwidth, the OQAM is used; or when the value of the scheduled bandwidth is greater than or equal to the threshold of the scheduled bandwidth, the QAM is used.

It should be noted that, in this embodiment of this application, the threshold of the scheduled bandwidth may be set based on a specific situation. This is not limited in embodiments of this application.

Still refer to Table 3. When the value of the scheduled bandwidth is less than or less than or equal to the threshold of the scheduled bandwidth, the OQAM is used when q=1, and the OQAM may also be used when q=2; or when the value of the scheduled bandwidth is greater than or equal to or greater than the threshold of the bandwidth extension, the QAM is used when q=2.

For example, the network device may set the threshold of the scheduled bandwidth to 50 RBs. When the value of the scheduled bandwidth is less than or less than or equal to 50 RBs, the OQAM is used when q=1, and the OQAM may also be used when q=2; or when the scheduled bandwidth is greater than or equal to or greater than 50 RBs, the QAM is used when q=2.

It should be understood that a granularity of a size of a frequency domain resource may be a resource block (resource block, RB), or may be a resource element (Resource Element, RE).

A smaller scheduled bandwidth indicates a larger PAPR gain of the OQAM than the QAM. Therefore, in this implementation, a large gain can be obtained by setting a modulation scheme corresponding to a narrow bandwidth to the OQAM (for example, the network device may set that the OQAM is supported when the scheduled bandwidth is less than or less than or equal to 50 RBs), and no modification is made for a wide bandwidth (for example, the QAM is still supported when the scheduled bandwidth is greater than 50 RBs, and no modification is made), thereby ensuring backward compatibility.

In some other embodiments, the network device may further determine the modulation scheme by setting the threshold of the spectral efficiency. When the value of the spectral efficiency is less than or less than or equal to the threshold of the spectral efficiency, the OQAM is used; or when the spectral efficiency is greater than the threshold of the spectral efficiency, the QAM is used.

Alternatively, when the value of the spectral efficiency is less than the threshold of the spectral efficiency, the OQAM is used; or when the spectral efficiency is greater than or equal to the threshold of the spectral efficiency, the QAM is used.

It should be noted that, in this embodiment of this application, the threshold of the spectral efficiency may be set based on a specific situation. This is not limited in embodiments of this application.

For example, the threshold of the spectral efficiency may be set to 0.4. In this case, when the value of the spectral efficiency is less than or less than 0.4, it represents that the OQAM for transmission is supported. Compared with an existing MCS table, more OQAMs for transmission are introduced, thereby reducing a PAPR.

The spectral efficiency, the modulation order, the code rate, and the bandwidth extension meet the following formula:

$$\text{Spectral efficiency}=\text{Modulation order}\times\text{Code rate}\times(\tfrac{1}{1+\alpha} \text{ or } (1-\beta))$$

A lower spectral efficiency indicates a larger PAPR gain of the OQAM than a QAM. Therefore, in this implementation, a large gain can be obtained by supporting a low spectral efficiency (for example, the network device may set that the OQAM is supported when a spectral efficiency is less than or less than or equal to 0.4), and no modification is made for a high spectral efficiency (for example, the network device may set that the QAM is still supported when the spectral efficiency is greater than 0.4), thereby ensuring backward compatibility.

In some other embodiments, the network device may determine the modulation scheme by setting the threshold of the MCS index. When the value of the MCS index is less than or equal to the threshold of the MCS index, the OQAM is used; or when the value of the MCS index is greater than the threshold of the MCS index, the QAM is used.

Alternatively, when the value of the MCS index is less than the threshold of the MCS index, the OQAM is used; or when the value of the MCS index is greater than or equal to the threshold of the MCS index, the QAM is used.

It should be noted that, in this embodiment of this application, the threshold of the MCS index may be set based on a specific situation. This is not limited in embodiments of this application.

For example, still refer to Table 3. The threshold of the MCS index may be set to 9. In this case, when the I_MCS is set to 0 to 9, the OQAM is supported; or when the MCS index is greater than 9, the QAM for transmission is supported.

A smaller MCS index indicates a lower spectral efficiency under a same condition (for example, a same bandwidth extension size) and a larger PAPR gain of the OQAM than the QAM. Therefore, in this implementation, a large gain can be obtained by changing a modulation scheme corresponding to a low MCS index to the OQAM (for example, the network device may set that the OQAM is supported when the MCS is less than or less than or equal to 9), and no modification is made for a high MCS index (for example, the network device may set that the QAM is still supported when the MCS is greater than 9, and no modification is made), thereby ensuring backward compatibility.

In some other embodiments, the network device may determine the modulation scheme by setting the threshold of the code rate. When the value of the code rate is less than or equal to the threshold of the code rate, the OQAM is used; or when the value of the code rate is greater than the threshold of the code rate, the QAM is used.

Alternatively, when the value of the code rate is less than the threshold of the code rate, the OQAM is used; or when the value of the code rate is greater than or equal to the threshold of the code rate, the QAM is used.

It should be noted that, in this embodiment of this application, the threshold of the code rate may be set based on a specific situation. This is not limited in embodiments of this application.

For example, still refer to Table 3. The threshold of the code rate may be set to 500/1024. In this case, when the threshold of the code rate is less than or less than or equal to 500/1024, the OQAM for transmission is supported; or when the code rate is greater than or equal to or greater than 500/1024, the QAM for transmission is supported.

It should be understood that the target code rate divided by 1024 is a used code rate of channel coding.

A lower code rate indicates a lower spectral efficiency under a same condition (for example, a same modulation order) and a larger PAPR gain of the OQAM than the QAM. Therefore, in this implementation, a large gain can be obtained by supporting in setting a modulation scheme corresponding to a low code rate to the OQAM (for example, the network device may set that the OQAM is supported when the code rate is lower than 500/1024), and no modification is made for a high code rate (for example, the network device may set that the QAM is still supported when the code rate is higher than 500, and no modification is made), thereby ensuring backward compatibility.

In conclusion, because the modulation scheme may be represented based on the modulation order, the bandwidth extension, the scheduled bandwidth, the spectral efficiency, the MCS index, and the code rate, the network device may set the threshold of the modulation order, the threshold of the bandwidth extension, the threshold of the scheduled bandwidth, the threshold of the spectral efficiency, the threshold of the MCS index, or the threshold of the code rate, so that more OQAMs are introduced, to generate signals with a low PAPR.

The foregoing provides specific descriptions by using any one of the modulation order, the bandwidth extension, the scheduled bandwidth, the spectral efficiency, the MCS index, and the code rate. Certainly, the modulation scheme may alternatively be jointly determined based on a plurality of parameters in the first parameter. In this manner, the thresholds of the parameters may be managed mutually, to ensure that a gain of each condition is obtained.

In a possible implementation, when the value of the modulation order is less than or less than or equal to the threshold of the modulation order, and the value of the bandwidth extension is greater than or greater than or equal to the threshold of the bandwidth extension, it is determined that the modulation scheme is the OQAM.

For example, when the threshold of the modulation order is 1, the threshold of the bandwidth extension is 0, the value of the modulation order is less than or less than or equal to 1, and the value of the bandwidth extension is greater than or greater than or equal to 0, the modulation scheme is the OQAM.

In another possible implementation, when the value of the modulation order is less than or less than or equal to the threshold of the modulation order, the value of the bandwidth extension is greater than or greater than or equal to the threshold of the bandwidth extension, and the value of the spectral efficiency is less than or less than or equal to the threshold of the spectral efficiency, the modulation scheme is the OQAM.

For example, when the threshold of the modulation order is 2, the threshold of the bandwidth extension is 0, the threshold of the spectral efficiency is 0.5, the value of the modulation order is less than or less than or equal to 2, the value of the bandwidth extension is greater than or greater than or equal to 0, and the value of the spectral efficiency is less than or less than or equal to 0.5, it is determined that the modulation scheme is the OQAM.

In still another possible implementation, when the value of the modulation order is greater than or equal to or greater than the threshold of the modulation order, and the value of the bandwidth extension is less than or equal to or less than the threshold of the bandwidth extension, the modulation scheme is the QAM.

For example, when a value of the threshold of the modulation order is 1, the threshold of the bandwidth extension is 0, the value of the modulation order is greater than or equal to or greater than 1, and the bandwidth extension is less than or equal to or less than 0, it is determined that the modulation scheme is the QAM.

In still another possible implementation, when the value of the modulation order is greater than or equal to or greater than the threshold of the modulation order, the value of the bandwidth extension is less than or equal to or less than the threshold of the bandwidth extension, and the value of the spectral efficiency is greater than or equal to or greater than the threshold of the spectral efficiency, the modulation scheme is the QAM.

For example, when the threshold of the modulation order is 2, the threshold of the bandwidth extension is 0, the threshold of the spectral efficiency is 0.5, the value of the modulation order is greater than or equal to or greater than 2, the value of the bandwidth extension is less than or equal to or less than 0, and the value of the spectral efficiency is greater than or equal to or greater than 0.5, it is determined that the modulation scheme is the QAM.

The plurality of parameters in the first parameter are randomly combined in a plurality of cases. Details are not described in embodiments of this application.

S720: The network device sends first indication information to a terminal device, where the first indication information indicates the modulation scheme.

After determining the modulation scheme according to step S710, the network device sends the first indication information to the terminal device, where the first indication information indicates the modulation scheme.

It should be noted that the first indication information may be configured by the network device by using higher layer signaling or physical layer signaling. The higher layer signaling may include, for example, radio resource control (radio resource control, RRC) signaling, and receiving and sending media access control-control element (media access control-control element, MAC-CE) signaling. The physical layer signaling may include, for example, downlink control information (downlink control information, DCI) and signaling transmitted through a downlink physical layer channel. The physical downlink channel may be, for example, a physical downlink control channel (physical downlink control channel, PDCCH) or a physical downlink shared channel (physical downlink shared channel, PDSCH).

S730: The terminal device performs modulation or demodulation based on the first indication information.

Finally, the terminal device performs modulation or demodulation based on the received modulation scheme. When more modulation schemes support the OQAM, a signal with a low PAPR is generated.

According to the method provided in this embodiment of this application, the network device can determine a signal modulation scheme based on at least one of a specified threshold of the modulation order, a specified threshold of the bandwidth extension, a specified threshold of the scheduled bandwidth, a specified threshold of the spectral efficiency, a specified threshold of the modulation and coding scheme MCS index, and a specified threshold of the code rate, so that more OQAMs can be introduced, to generate signals with a low PAPR.

In some possible implementations, the terminal device may further send second indication information to the network device, where the second indication information indicates a modulation capability supported by the terminal device, and the modulation capability may be indicated by at least one of the modulation order, the bandwidth extension, the scheduled bandwidth, the spectral efficiency, the MCS index, and the code rate. After receiving the modulation capability reported by the terminal device, the network device may determine the threshold of the first parameter based on the modulation capability. In this implementation, the network device may select a more appropriate modulation scheme for the terminal device based on the capability reported by the terminal device.

Optionally, the second indication information may be a value of a modulation order supported by the terminal device, a value of bandwidth extension supported by the terminal device, a value of a scheduled bandwidth supported by the terminal device, a value of a spectral efficiency supported by the terminal device, a value of an MCS index supported by the terminal device, and a value of a code rate supported by the terminal device, or the second indication information may be a threshold of a modulation order supported by the terminal device, a threshold of bandwidth extension supported by the terminal device, a threshold of a scheduled bandwidth supported by the terminal device, a threshold of a spectral efficiency supported by the terminal device, a threshold of an MCS index supported by the terminal device, and a threshold of a code rate supported by the terminal device.

For example, when the terminal device reports that the terminal device supports the OQAM when the modulation order is less than or less than or equal to 2, the network device may set the threshold of the modulation order to 2.

For another example, the terminal device may report that the terminal device supports the OQAM when the modulation order is 2. In this case, the network device may also set the threshold of the modulation order to 2.

For another example, when the terminal device reports that the terminal device supports the OQAM when the modulation order is less than or less than or equal to 2 and the code rate is less than or less than or equal to 500/1024, the network device may set the threshold of the modulation order to 2 and set the threshold of the code rate to 500/1024.

For another example, when the terminal device reports that the terminal device supports the OQAM when the modulation order is 2 and the code rate is 500/1024, the network device may set the threshold of the modulation order to 2 and set the threshold of the code rate to 500/1024. When the value of the modulation order is less than or less than or equal to 2 and the value of the code rate is less than or less than or equal to 500/1024, the OQAM is supported.

In some other possible implementations, the terminal device may further send third indication information to the network device, where the third indication information indicates whether the terminal device supports the OQAM or the QAM.

In the coding method 700 provided in this application, the network device determines the modulation scheme by setting the threshold of the first parameter, that is, determines the modulation scheme by setting at least one of the threshold of the modulation order, the threshold of the bandwidth extension, the threshold of the scheduled bandwidth, the threshold of the spectral efficiency, the threshold of the MCS index, and the threshold of the code rate. In this case, a value of the threshold of the first parameter may also be determined by a value of another parameter in the first parameter.

In a possible implementation, the threshold of the modulation order may be determined based on at least one of the bandwidth extension, the scheduled bandwidth, the spectral efficiency, the MCS index, and the code rate, so that a gain of each condition can be obtained in a signal coding process, that is, a maximum gain is obtained.

Optionally, when the bandwidth extension is smaller, the scheduled bandwidth is larger, the spectral efficiency is higher, the MCS index is larger, or the code rate is higher, a smaller threshold of the modulation order may be set. In this implementation, after the gain of each condition is obtained, the OQAM can be better supported, so that the OQAM has a larger PAPR gain than the QAM. In addition, the conventional QAM is supported to a maximum extent, and backward compatibility is ensured.

For example, when the bandwidth extension is greater than 1.5 times, that is, when $1/Z > 1.5$ or $z < 2/3$, the threshold of the modulation order may be set to 2. When the value of the modulation order is less than or less than or equal to 2, the OQAM is used; or when the value of the modulation order is greater than or equal to or greater than 2, the QAM is used. When the bandwidth extension is less than or equal to 1.5 times, that is, when $1/Z \leq 1.5$ or $z \geq 2$, the threshold of the modulation order may be set to 1. When the value of the modulation order is 1, the OQAM is used; or when the value of the modulation order is greater than 1, the QAM is used.

For another example, when the spectral efficiency is greater than or equal to 1, the threshold of the modulation order may be set to 1. When the value of the modulation order is less than or less than or equal to 1, the OQAM is used; or when the value of the modulation order is greater than or equal to or greater than 1, the QAM is used. When the spectral efficiency is less than 1, the threshold of the modulation order may be set to 2. When the value of the modulation order is less than or less than or equal to 2, the OQAM is used; or when the value of the modulation order is greater than or equal to or greater than 2, the QAM is used.

For another example, when the bandwidth extension is greater than 1.5 times and the spectral efficiency is less than 1, the threshold of the modulation order may be set to 2. When the value of the modulation order is less than or less than or equal to 2, the OQAM is used; or when the value of the modulation order is greater than or equal to or greater than 2, the QAM is used. When the bandwidth extension is less than or equal to 1.5 times and the spectral efficiency is greater than or equal to 1, the threshold of the modulation order may be set to 1. When the value of the modulation order is less than or less than or equal to 1, the OQAM is used; or when the value of the modulation order is greater than 1, the QAM is used.

In another possible implementation, the threshold of the bandwidth extension may be determined based on at least one of the modulation order, the scheduled bandwidth, the spectral efficiency, the MCS index, and the code rate, so that a gain of each condition can be obtained in a signal coding process, that is, a maximum gain is obtained.

Optionally, when the modulation order is lower, the scheduled bandwidth is larger, the spectral efficiency is higher, the MCS index is larger, or the code rate is higher, a smaller threshold of the bandwidth extension may be set. In this implementation, after the gain of each condition is obtained, the OQAM can be better supported, so that the OQAM has a larger PAPR gain than the QAM. In addition, the conventional QAM is supported to a maximum extent, and backward compatibility is ensured.

For example, when the modulation order is 1, the threshold of the bandwidth extension may be set to 1.5 times. When the value of the bandwidth extension is greater than or greater than or equal to 1.5 times, the OQAM is used; or when the value of the bandwidth extension is less than or equal to or less than 1.5 times, the QAM is used. When the modulation order is greater than or equal to 2, the threshold of the bandwidth extension may be set to 2 times. When the value of the bandwidth extension is greater than or equal to 2 times, the OQAM is used; or when the value of the bandwidth extension is less than 2 times, the QAM is used.

For another example, when the spectral efficiency is greater than or equal to 1, the threshold of the bandwidth extension may be set to 1.5 times. When the value of the bandwidth extension is greater than or greater than or equal to 1.5 times, the OQAM is used; or when the value of the bandwidth extension is less than or equal to or less than 1.5 times, the QAM is used. When the spectral efficiency is less than 1, the threshold of the bandwidth extension may be set to 2 times. When the value of the bandwidth extension is greater than or greater than or equal to 2 times, the OQAM is used; or when the value of the bandwidth extension is less than or equal to or less than 2 times, the QAM is used.

For another example, when the modulation order is 1 and the spectral efficiency is greater than or equal to 1, the threshold of the bandwidth extension may be set to 1.5 times. When the value of the bandwidth extension is greater than or greater than or equal to 1.5 times, the OQAM is used; or when the value of the bandwidth extension is less than or equal to or less than 1.5 times, the QAM is used. When the modulation order is greater than or equal to 2, the threshold of the bandwidth extension may be set to 2 times. When the value of the bandwidth extension is greater than or greater than or equal to 2 times, the OQAM is used; or when the value of the bandwidth extension is less than or equal to or less than 2 times, the QAM is used.

In still another possible implementation, the threshold of the scheduled bandwidth may be determined based on at least one of the modulation order, the bandwidth extension, the spectral efficiency, the MCS index, and the code rate, so that a gain of each condition can be obtained in a signal coding process, that is, a maximum gain is obtained.

Optionally, when the modulation order is lower, the bandwidth extension is smaller, the spectral efficiency is higher, the MCS index is larger, or the code rate is higher, a smaller threshold of the scheduled bandwidth may be set. In this implementation, after the gain of each condition is obtained, the OQAM can be better supported, so that the OQAM has a larger PAPR gain than the QAM. In addition, the conventional QAM is supported to a maximum extent, and backward compatibility is ensured.

For example, when the modulation order is 1, the threshold of the scheduled bandwidth may be set to 40 RBs. When the value of the scheduled bandwidth is less than or less than or equal to 40 RBs, the OQAM is used; or when the value of the scheduled bandwidth is greater than or equal to or greater than 40 RBs, the QAM is used. When the modulation order is greater than or equal to 2, the threshold of the scheduled bandwidth may be set to 50 RBs. When the value of the scheduled bandwidth is less than or less than or equal to 50 RBs, the OQAM is used; or when the value of the scheduled bandwidth is greater than or equal to or greater than 50 RBs, the QAM is used.

For another example, when the spectral efficiency is greater than 1, the threshold of the scheduled bandwidth may be set to 40 RBs. When the value of the scheduled bandwidth is less than or less than or equal to 40 RBs, the OQAM is used; or when the value of the scheduled bandwidth is greater than or equal to or greater than 40 RBs, the QAM is used. When the spectral efficiency is less than or equal to 1, the threshold of the scheduled bandwidth may be set to 50 RBs. When the value of the scheduled bandwidth is less than or less than or equal to 50 RBs, the OQAM is used; or when the value of the scheduled bandwidth is greater than or equal to or greater than 50 RBs, the QAM is used.

For another example, when the modulation order is 1 and the spectral efficiency is greater than 1, the threshold of the scheduled bandwidth may be set to 40 RBs. When the value of the scheduled bandwidth is less than or less than or equal to 40 RBs, the OQAM is used; or when the value of the scheduled bandwidth is greater than or equal to or greater than 40 RBs, the QAM is used. When the modulation order is greater than or equal to 2 and the spectral efficiency is 1, the threshold of the scheduled bandwidth may be set to 50 RBs. When the value of the scheduled bandwidth is less than or less than or equal to 50 RBs, the OQAM is used; or when the value of the scheduled bandwidth is greater than or equal to or greater than 50 RBs, the QAM is used.

In still another possible implementation, the threshold of the spectral efficiency may be determined based on at least one of the modulation order, the bandwidth extension, the scheduled bandwidth, the MCS index, and the code rate, so that a gain of each condition can be obtained in a signal coding process, that is, a maximum gain is obtained.

Optionally, when the modulation order is lower, the bandwidth extension is smaller, the scheduled bandwidth is larger, the MCS index is larger, or the code rate is higher, a larger threshold of the spectral efficiency may be set. In this implementation, after the gain of each condition is obtained, the OQAM can be better supported, so that the OQAM has a larger PAPR gain than the QAM. In addition, the conventional QAM is supported to a maximum extent, and backward compatibility is ensured.

For example, when the modulation order is 1, the threshold of the spectral efficiency may be set to 1. When the value of the spectral efficiency is less than or less than or equal to 1, the OQAM is used; or when the value of the spectral efficiency is greater than or equal to or greater than 1, the QAM is used. When the modulation order is greater than or equal to 2, the threshold of the spectral efficiency may be set to 0.5. When the value of the spectral efficiency is less than or less than or equal to 0.5, the OQAM is used; or when the value of the spectral efficiency is greater than or equal to or greater than 0.5, the QAM is used.

For another example, when the bandwidth extension is greater than 1.5 times, the threshold of the spectral efficiency may be set to 0.5. When the value of the spectral efficiency is less than or less than or equal to 0.5, the OQAM is used; or when the value of the spectral efficiency is greater than or equal to or greater than 0.5, the QAM is used. When the bandwidth extension is less than or equal to 1.5 times, the threshold of the spectral efficiency may be set to 1. When the value of the spectral efficiency is less than or less than or equal to 1, the OQAM is used; or when the value of the spectral efficiency is greater than or equal to or greater than 1, the QAM is used.

For another example, when the modulation order is 1 and the bandwidth extension is less than or equal to 1.5 times, the threshold of the spectral efficiency may be set to 1. When the value of the spectral efficiency is less than or less than or equal to 1, the OQAM is used; or when the value of the spectral efficiency is greater than or equal to or greater than 1, the QAM is used. When the modulation order is greater than or equal to 2 and the bandwidth extension is greater than 1.5 times, the threshold of the spectral efficiency may be set to 0.5. When the value of the spectral efficiency is less than or less than or equal to 0.5, the OQAM is used; or when the value of the spectral efficiency is greater than or equal to or greater than 1, the QAM is used.

In still another possible implementation, the threshold of the MCS index may be determined based on at least one of the modulation order, the bandwidth extension, the scheduled bandwidth, the spectral efficiency, the MCS index, and the code rate, so that a gain of each condition can be obtained in a signal coding process, that is, a larger gain is obtained.

Optionally, when the modulation order is lower, the bandwidth extension is smaller, the scheduled bandwidth is larger, the spectral efficiency is higher, or the code rate is higher, a larger threshold of the MCS index may be set. In this implementation, after the gain of each condition is obtained, the OQAM can be better supported, so that the OQAM has a larger PAPR gain than the QAM. In addition, the conventional QAM is supported to a maximum extent, and backward compatibility is ensured.

For example, when the modulation order is 1, the threshold of the MCS index may be set to 9. When the value of the MCS index is less than or less than or equal to 9, the OQAM is used; or when the value of the MCS index is greater than or equal to or greater than 9, the QAM is used. When the modulation order is greater than or equal to 2, the threshold of the MCS index may be set to 4. When the value of the MCS index is less than or less than or equal to 4, the OQAM is used; or when the value of the MCS index is greater than or equal to or greater than 4, the QAM is used.

For another example, when the spectral efficiency is greater than 1, the threshold of the MCS index may be set to 9. When the value of the MCS index is less than or less than or equal to 9, the OQAM is used; or when the value of the MCS index is greater than or equal to or greater than 9, the QAM is used. When the spectral efficiency is less than or equal to 1, the threshold of the MCS index may be set to 4. When the value of the MCS index is less than or less than or equal to 4, the OQAM is used; or when the value of the MCS index is greater than or equal to or greater than 4, the QAM is used.

For another example, when the modulation order is 1 and the spectral efficiency is greater than 1, the threshold of the MCS index may be set to 9. When the value of the MCS index is less than or less than or equal to 9, the OQAM is used; or when the value of the MCS index is greater than or equal to or greater than 9, the QAM is used. When the modulation order is greater than or equal to 2 and the spectral efficiency is less than or equal to 1, the threshold of the MCS index may be set to 4. When the value of the MCS index is less than or less than or equal to 4, the OQAM is used; or when the value of the MCS index is greater than or equal to or greater than 4, the QAM is used.

In still another possible implementation, the threshold of the code rate is associated with at least one of the modulation order, the bandwidth extension, the scheduled bandwidth, the spectral efficiency, and the MCS index. The OQAM is jointly supported, so that a gain of each condition can be obtained in a signal coding process, that is, a larger gain is obtained.

Optionally, when the modulation order is lower, the bandwidth extension is smaller, the scheduled bandwidth is larger, the spectral efficiency is higher, or the MCS index is larger, a larger threshold of the code rate may be set. In this implementation, after the gain of each condition is obtained, the OQAM can be better supported, so that the OQAM has a larger PAPR gain than the QAM. In addition, the conventional QAM is supported to a maximum extent, and backward compatibility is ensured.

For example, when the modulation order is 1, the threshold of the code rate may be set to 500/1024. When the value of the code rate is less than or less than or equal to 500/1024, the OQAM is used; or when the value of the code rate is greater than or equal to or greater than 500/1024, the QAM is used. When the modulation order is greater than or equal to 2, the threshold of the code rate may be set to 200/1021. When the value of the code rate is less than or less than or equal to 200/1024, the OQAM is used; or when the value of the code rate is greater than or equal to or greater than 200/1024, the QAM is used.

For another example, when the spectral efficiency is greater than 1, the threshold of the code rate may be set to 500/1024. When the value of the code rate is less than or less than or equal to 500/1024, the OQAM is used; or when the value of the code rate is greater than or equal to or greater than 500/1024, the QAM is used. When the spectral efficiency is less than or equal to 1, the threshold of the scheduled bandwidth may be set to 200/1024. When the value of the code rate is less than or less than or equal to 200/1024, the OQAM is used; or when the value of the code rate is greater than or equal to or greater than 200/1024, the QAM is used.

For another example, when the modulation order is 1 and the spectral efficiency is greater than 1, the threshold of the code rate may be set to 500/1024. When the value of the code rate is less than or less than or equal to 500/1024, the OQAM is used; or when the value of the code rate is greater than or equal to or greater than 500/1024, the QAM is used. When the modulation order is greater than or equal to 2 and the spectral efficiency is less than or equal to 1, the threshold of the code rate may be set to 200/1024. When the value of the code rate is less than or less than or equal to 200/1024, the OQAM is used; or when the value of the code rate is greater than or equal to or greater than 200/1024, the QAM is used.

In some other implementations of this application, the network device may directly indicate whether the terminal device can use the OQAM or the QAM. When the network device indicates that the OQAM can be used, and a value of the first parameter meets the threshold of the first parameter, the OQAM is used; otherwise, the QAM is used.

In some other implementations of this application, when the network device performs downlink transmission to the terminal device by using a single-carrier waveform, the OQAM may be used. In other words, when the network device indicates the terminal device to perform uplink transmission, the single-carrier waveform may be used. In this case, the terminal device may use the OQAM. Otherwise, when the network device performs downlink transmission to the terminal device by using a multi-carrier waveform, the QAM is used. In other words, when the network device indicates the terminal device to perform uplink transmission by using the multi-carrier waveform, the QAM is used.

For example, when a transmitted waveform is a discrete Fourier transform spread OFDM (discrete Fourier transform spread orthogonal frequency division multiplexing, DFT-S-OFDM), the OQAM is used. When a transmitted waveform is orthogonal frequency division multiplexing (orthogonal frequency division multiplexing, OFDM)/orthogonal time frequency space (orthogonal time frequency space, OTFS), the QAM is used.

It should be understood that division into manners, cases, categories, and embodiments in embodiments of this application is merely intended for ease of description, and shall not constitute a particular limitation. Features in various manners, categories, cases, and embodiments may be combined without contradiction.

It should be further understood that, the foregoing descriptions are merely intended to help a person skilled in the art better understand embodiments of this application, instead of limiting the scope of embodiments of this application. It is clear that a person skilled in the art may make various equivalent modifications or changes based on the foregoing examples. For example, some steps may be unnecessary, or some steps may be newly added. Alternatively, any two or more of the foregoing embodiments are combined. A modified, changed, or combined solution also falls within the scope of embodiments of this application.

It should be further understood that the foregoing descriptions of embodiments of this application emphasize differences between embodiments. For same or similar parts that are not mentioned, refer to embodiments. For brevity, details are not described herein again.

It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that, in embodiments of this application, "presetting" and "predefining" may be implemented by prestoring corresponding code or a corresponding table on a device (for example, including the terminal device and the network device), or in another manner that may be used to indicate related information. A specific implementation thereof is not limited in this application.

It should be further understood that, in various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

The foregoing describes in detail examples of the communication method provided in this application. It may be understood that, to implement the foregoing functions, the terminal device and the network device include corresponding hardware structures and/or software modules for performing the functions. A person skilled in the art should be easily aware that, in combination with units and algorithm steps of the examples described in embodiments disclosed in this specification, this application can be implemented in a form of hardware or combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes a communication apparatus according to this application.

For example, FIG. 8 is a block diagram of a communication apparatus 800 according to an embodiment of this application. The communication apparatus 800 may correspond to the network device described in embodiments of the method 700, or may be a chip or a component used in the network device. In addition, modules or units in the communication apparatus 800 are separately configured to perform actions or processing processes performed by the network device described in embodiments of the method 700.

As shown in FIG. 8, the communication apparatus 800 includes a processing unit 810 and a transceiver unit 820. The transceiver unit 820 is configured to specifically send or receive a signal under driving of the processing unit 810.

In some embodiments,

the processing unit 810 is configured to determine a modulation scheme, where the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and

the transceiver unit 820 is configured to send first indication information to a terminal device, where the first indication information indicates the modulation scheme.

The communication apparatus provided in this application can determine a signal modulation scheme based on at least one of a specified threshold of the modulation order, a specified threshold of the bandwidth extension, a specified threshold of the scheduled bandwidth, a specified threshold of the spectral efficiency, a specified threshold of the modulation and coding scheme MCS index, and a specified threshold of the code rate, so that more OQAMs can be introduced, to generate signals with a low PAPR.

Optionally, when the threshold of the first parameter meets at least one of the following, the modulation scheme is an OQAM: a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

Optionally, when the threshold of the first parameter meets at least one of the following, the modulation scheme is a QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

Optionally, when the threshold of the modulation order is 1, the threshold of the bandwidth extension is 0, the modulation order is less than or less than or equal to the threshold of the modulation order, and the bandwidth extension is greater than or greater than or equal to the threshold of the bandwidth extension, the modulation scheme is the OQAM. In this implementation, the modulation scheme is determined by associating the modulation order with the bandwidth extension, to better support the OQAM.

Optionally, the threshold of the modulation order is 1, the threshold of the bandwidth extension is 0, the modulation order is greater than or equal to or greater than the threshold of the modulation order, the bandwidth extension is less than the threshold of the bandwidth extension, and it is determined that the modulation scheme is the QAM.

Optionally, the threshold of the modulation order is greater than or equal to 2. In this implementation, when the threshold of the modulation order is greater than or greater than or equal to 2, and the value of the modulation order is less than or less than or equal to the threshold of the modulation order, the OQAM is supported. Compared with the conventional technology, more OQAMs are introduced, to generate signals with a low PAPR.

Optionally, the transceiver unit 820 is further configured to receive second indication information, where the second indication information indicates a modulation capability supported by the terminal device, and the modulation capability is indicated by at least one of the modulation order, the bandwidth extension, the scheduled bandwidth, the spectral efficiency, the modulation and coding scheme MCS index, and the code rate; and the threshold of the first parameter is determined based on the second indication information. In this implementation, the terminal device can report the supported modulation capability, and a network device can set an appropriate threshold of the first parameter based on the capability reported by the terminal device.

Optionally, the transceiver unit 820 is further configured to receive third indication information, where the third indication information indicates whether the terminal device supports the offset quadrature amplitude modulation OQAM or the quadrature amplitude modulation QAM.

Optionally, the threshold of the first parameter may be directly configured by the network device, or may be predefined in a protocol.

Optionally, the threshold of the first parameter is related to a value of another parameter in the first parameter. For example, the threshold of the modulation order may be related to the value of the bandwidth extension. In this implementation, the threshold of the modulation order is associated with another parameter, so that a gain of each condition can be ensured, the conventional QAM is supported to a maximum extent, and backward compatibility is ensured.

It should be understood that, for a specific process in which the units in the communication apparatus 800 perform the foregoing corresponding steps, refer to the foregoing descriptions related to the network device in the related embodiments with reference to the method 700 and FIG. 7. For example, the transceiver unit 820 may perform receiving and sending steps in the foregoing method embodiments, and the processing unit 810 may perform a step other than receiving and sending. Various specific processing is described in the method embodiments. For brevity, details are not described herein again.

It should be understood that the communication apparatus may further include a storage unit. The storage unit is configured to store instructions executed by the transceiver unit 820 and the processing unit 810. The transceiver unit 820, the processing unit 810, and the storage unit are coupled to each other. The storage unit stores the instructions. The processing unit 810 is configured to execute the instructions stored in the storage unit. The transceiver unit 820 is configured to specifically send or receive a signal under driving of the processing unit 810.

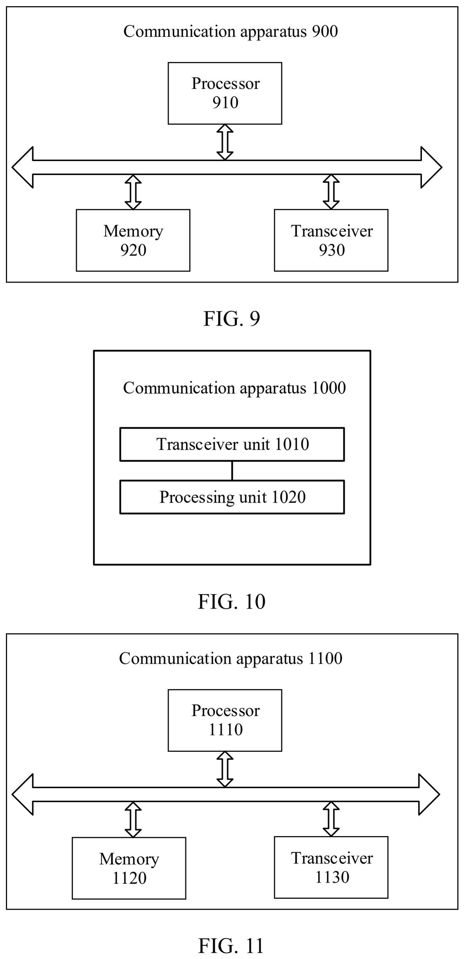

It should be understood that the transceiver unit 820 may be a transceiver, an input/output interface, or an interface circuit. The storage unit may be a memory. The processing unit 810 may be implemented by a processor. FIG. 9 is a block diagram of another example communication apparatus 900 according to an embodiment of this application. As shown in FIG. 9, the communication apparatus 900 may include a processor 910, a memory 920, and a transceiver 930.

The communication apparatus 800 shown in FIG. 8 or the communication apparatus 900 shown in FIG. 9 can implement the steps performed by the network device in the foregoing method 700. For similar descriptions, refer to the descriptions in the foregoing corresponding methods. To avoid repetition, details are not described herein again.

It should be further understood that the communication apparatus 800 shown in FIG. 8 or the communication apparatus 900 shown in FIG. 9 may be a network device.

FIG. 10 is a block diagram of a communication apparatus 1000 according to an embodiment of this application. The communication apparatus 1000 may correspond to the terminal device described in the method 700, or may be a chip or a component used in the terminal device. In addition, modules or units in the communication apparatus 1000 are separately configured to perform actions or processing processes performed by the terminal device in the method 700.

As shown in FIG. 10, the communication apparatus 1000 may include a transceiver unit 1010 and a processing unit 1020. The transceiver unit 1010 is configured to specifically send or receive a signal under driving of the processing unit 1020.

In some embodiments,

the transceiver unit 1010 is configured to receive first indication information, where the first indication information indicates a modulation scheme, the modulation scheme is related to a threshold of a first parameter, and the first parameter includes at least one of the following: a modulation order, bandwidth extension, scheduled bandwidth, spectral efficiency, a modulation and coding scheme MCS index, and a code rate; and
the processing unit 1020 is configured to perform modulation or demodulation based on the first indication information.

The apparatus provided in this application can perform modulation based on the first indication information of a network device. The first indication information is determined based on at least one of a threshold of the modulation order, a threshold of the bandwidth extension, a threshold of the scheduled bandwidth, a threshold of the spectral efficiency, a threshold of the modulation and coding scheme MCS index, and a threshold of the code rate. In this manner, more OQAMs can be introduced, to generate signals with a low PAPR.

Optionally, when the threshold of the first parameter meets at least one of the following, the modulation scheme is an OQAM: a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

Optionally, when the threshold of the first parameter meets at least one of the following, the modulation scheme is a QAM: the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

Optionally, when the threshold of the modulation order is 1, the threshold of the bandwidth extension is 0, the modulation order is less than or greater than or equal to the threshold of the modulation order, and the bandwidth extension is greater than or greater than or equal to the threshold of the bandwidth extension, the modulation scheme is the OQAM. In this implementation, the modulation scheme is determined by associating the modulation order with the bandwidth extension, to better support the OQAM.

Optionally, the threshold of the modulation order is 1, the threshold of the bandwidth extension is 0, the modulation order is greater than or equal to or greater than the threshold of the modulation order, the bandwidth extension is less than or equal to or less than the threshold of the bandwidth extension, and it is determined that the modulation scheme is the QAM.

Optionally, the threshold of the modulation order is greater than or equal to 2. In this implementation, when the threshold of the modulation order is greater than or equal to 2, and the value of the modulation order is less than or less than or equal to the threshold of the modulation order, the OQAM is supported. Compared with the conventional technology, more OQAMs are introduced, to generate signals with a low PAPR.

Optionally, the transceiver unit 1010 is configured to send second indication information, where the second indication information indicates a modulation capability supported by a terminal device, and the modulation capability is indicated by at least one of the modulation order, the bandwidth extension, the scheduled bandwidth, the spectral efficiency, the modulation and coding scheme MCS index, and the code rate; and the threshold of the first parameter is determined based on the second indication information. In this implementation, the apparatus can report the modulation capability supported by the terminal device, and the network device can set an appropriate threshold of the first parameter based on the capability reported by the terminal device.

Optionally, the transceiver unit 1010 is further configured to send third indication information, where the third indication information indicates whether the terminal device supports the offset quadrature amplitude modulation OQAM or the quadrature amplitude modulation QAM.

Optionally, the threshold of the first parameter may be directly configured by the network device, or may be predefined in a protocol.

Optionally, the threshold of the first parameter is related to a value of another parameter in the first parameter. For example, the threshold of the modulation order may be related to the value of the bandwidth extension. In this implementation, the threshold of the modulation order is associated with another parameter, so that a gain of each condition can be ensured, the conventional QAM is supported to a maximum extent, and backward compatibility is ensured.

It should be understood that, for a specific process in which the units in the communication apparatus 1000 perform the foregoing corresponding steps, refer to the foregoing descriptions related to the terminal device in the related embodiments with reference to the method 700 and FIG. 7. For example, the transceiver unit 1010 may perform receiving and sending steps in the foregoing method embodiments, and the processing unit 1020 may perform a step other than receiving and sending. Various specific processing is described in the method embodiments. For brevity, details are not described herein again.

It should be understood that the communication apparatus may further include a storage unit. The storage unit is configured to store instructions executed by the transceiver unit 1010 and the processing unit 1020. The transceiver unit 1010, the processing unit 1020, and the storage unit are coupled to each other. The storage unit stores the instructions. The processing unit 1020 is configured to execute the instructions stored in the storage unit. The transceiver unit 1010 is configured to specifically send or receive a signal under driving of the processing unit 1020.

It should be understood that the transceiver unit 1010 may be a transceiver, an input/output interface, or an interface circuit. The storage unit may be a memory. The processing unit 1020 may be implemented by a processor. FIG. 11 is a block diagram of another example communication apparatus 1100 according to an embodiment of this application. As shown in FIG. 11, the communication apparatus 1100 may include a processor 1110, a memory 1120, and a transceiver 1130.

The communication apparatus 1000 shown in FIG. 10 or the communication apparatus 1100 shown in FIG. 11 can implement the steps performed by the terminal device in the foregoing method 700. For similar descriptions, refer to the descriptions in the foregoing corresponding methods. To avoid repetition, details are not described herein again.

It should be further understood that the communication apparatus 1000 shown in FIG. 10 or the communication apparatus 1100 shown in FIG. 11 may be a terminal device.

It should be further understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

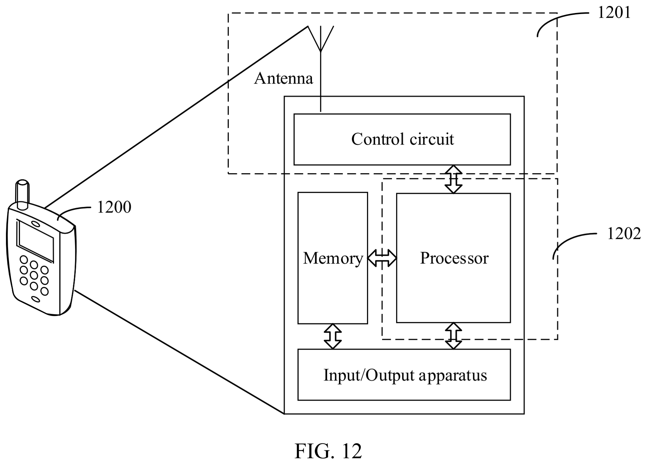

FIG. 12 is a diagram of a structure of a terminal device 1200 according to this application. The communication apparatus 1000 or the communication apparatus 1100 may be configured in the terminal device 1200. Alternatively, the communication apparatus 1000 or the communication apparatus 1100 may be the terminal device 1200. In other words, the terminal device 1200 may perform the actions performed by the terminal device in the foregoing method 700. Optionally, for ease of description, FIG. 12 shows only main components of the terminal device. As shown in FIG. 12, the terminal device 1200 includes a processor, a memory, a control circuit, an antenna, and an input/output apparatus.

The processor is mainly configured to: process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to: perform conversion between a baseband signal and a radio frequency signal, and process the radio frequency signal. The control circuit and the antenna together may also be referred to as a transceiver, and are mainly configured to send or receive a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 12 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 1201 of the terminal device 1200, and the processor having a processing function may be considered as a processing unit 1202 of the terminal device 1200. As shown in FIG. 12, the terminal device 1200 includes the transceiver unit 1201 and the processing unit 1202. The transceiver unit may also be referred to as a transceiver, a transceiver device, a transceiver apparatus, or the like. Optionally, a component that is in the transceiver unit 1201 and that is configured to implement a receiving function may be considered as a receiving unit, and a component that is in the transceiver unit 1201 and that is configured to implement a sending function may be considered as a sending unit. In other words, the transceiver unit 1201 includes a receiving unit and a sending unit. For example, the receiving unit may also be referred to as a receiver, a receiving device, or a receiving circuit, and the sending unit may also be referred to as a transmitter, a transmitting device, or a transmitting circuit.

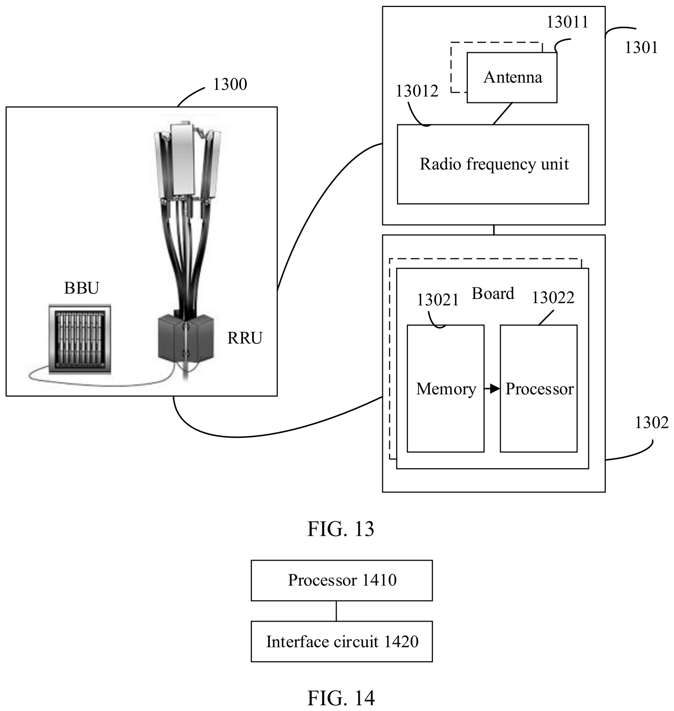

FIG. 13 is a diagram of a structure of a network device 1300 according to an embodiment of this application. The network device 1300 may be configured to implement a function of the network device in the foregoing methods. The network device 1300 includes one or more radio frequency units, such as a remote radio unit (remote radio unit, RRU) 1301 and one or more baseband units (baseband units, BBUs) (which may also be referred to as digital units, digital units, DUs) 1302. The RRU 1301 may be referred to as a transceiver unit, a transceiver device, a transceiver circuit, a transceiver, or the like, and may include at least one antenna 13011 and a radio frequency unit 13012. The RRU 1301 is mainly configured to: send or receive a radio frequency signal and perform conversion between a radio frequency signal and a baseband signal, for example, send the signaling message in the foregoing embodiments to a terminal device. The BBU 1302 is mainly configured to: perform baseband processing, control a base station, and the like. The RRU 1301 and the BBU 1302 may be physically disposed together, or may be physically disposed separately, that is, in a distributed base station.

The BBU 1302 is a control center of the base station, may also be referred to as a processing unit, and is mainly configured to implement baseband processing functions such as channel coding, multiplexing, modulation, and spectrum spreading. For example, the BBU (processing unit) 1302 may be configured to control the base station to perform an operation procedure related to the network device in the foregoing method embodiments.

In an example, the BBU 1302 may include one or more boards. A plurality of boards may together support a radio access network (for example, an LTE system, or a 5G system) of a single access standard, or may separately support radio access networks of different access standards. The BBU 1302 further includes a memory 13021 and a processor 13022. The memory 13021 is configured to store instructions and data that are necessary. For example, the memory 13021 stores the codebook and the like in the foregoing embodiments. The processor 13022 is configured to control the base station to perform a necessary action, for example, is configured to control the base station to perform an operation procedure related to the network device in the foregoing method embodiments. The memory 13021 and the processor 13022 may serve one or more boards. In other words, a memory and a processor may be disposed on each board. Alternatively, a plurality of boards may share a same memory and a same processor. In addition, a necessary circuit may be further disposed on each board.

In a possible implementation, with development of a system-on-chip (system-on-chip, SoC) technology, all or a part of functions of the components 1302 and 1301 may be implemented by using the SoC technology, for example, implemented by using one base station function chip. The base station function chip integrates components such as a processor, a memory, and an antenna port. A program of a base station-related function is stored in the memory, and the processor executes the program to implement the base station-related function. Optionally, the base station function chip can also read a memory outside the chip to implement the base station-related function.

It should be further understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides a chip system. As shown in FIG. 14, the chip system includes at least one processor 1410 and at least one interface circuit 1420. The processor 1410 and the interface circuit 1420 may be interconnected through a line. For example, the interface circuit 1420 may be configured to receive a signal from another apparatus (for example, a memory of the network device 1300). For another example, the interface circuit 1420 may be configured to send a signal to another apparatus. For example, the interface circuit 1420 may read instructions stored in a memory, and send the instructions to the processor 1410. When the instructions are executed by the processor 1410, a terminal device is enabled to perform the steps performed by the terminal device in the foregoing embodiments. Certainly, the chip system may further include another discrete component. This is not specifically limited in embodiments of this application.

An embodiment of this application further provides a computer-readable storage medium, configured to store computer program code. The computer program includes instructions used to perform any coding scheme determining method provided in the foregoing embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, a network device and a terminal device are enabled to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any coding scheme determining method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The terminal device, the computer-readable storage medium, the computer program product, or the chip provided in embodiments is configured to perform the corresponding methods provided above. Therefore, for beneficial effects that can be achieved, refer to the beneficial effects of the corresponding methods provided above. Details are not described herein again.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM and is used as an external cache. There are a plurality of different types of RAMs such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/ information/devices/network elements/systems/apparatuses/actions/operations/procedures/concepts. It can be understood that the specific names do not constitute any limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person of ordinary skill in the art may be aware that, the units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or a part of the methods in embodiments of this application may be implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or a part of the procedures or functions in embodiments of this application are performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, and may be located in one location, or may be distributed on a plurality of network units. A part or all of the units may be selected based on actual requirements to achieve the objectives of the solutions of embodiments.

In addition, all functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a readable storage medium, and includes several instructions for enabling a computer device (which may be a personal computer, a server, a network device, or the like) to perform all or a part of the steps of the methods described in embodiments of this application. The foregoing readable storage medium includes any medium that can store program code, for example, a USB flash drive, a removable hard disk, a ROM, a RAM, a magnetic disk, or an optical disc.

**Claims**

**1.** A coding scheme determining method, wherein the method comprises:

determining a modulation scheme, wherein the modulation scheme is related to a threshold of a first parameter, and the first parameter comprises at least one of the following: a modulation order, bandwidth extension, scheduled bandwidth, spectral efficiency, a modulation and coding scheme MCS index, and a code rate; and sending first indication information to a terminal device, wherein the first indication information indicates the modulation scheme.

2. The method according to claim 1, wherein when the threshold of the first parameter meets at least one of the following, the modulation scheme is an offset quadrature amplitude modulation OQAM:
a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

3. The method according to claim 1 or 2, wherein when the threshold of the first parameter meets at least one of the following, the modulation scheme is a quadrature amplitude modulation QAM:
the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

4. The method according to claim 1 or 2, wherein when the threshold of the modulation order is 1, the threshold of the bandwidth extension is 0, the value of the modulation order is less than or less than or equal to the threshold of the modulation order, and the value of the bandwidth extension is greater than or greater than or equal to the threshold of the bandwidth extension, the modulation scheme is the OQAM.

5. The method according to claim 1 or 3, wherein when the threshold of the modulation order is 1, the threshold of the bandwidth extension is 0, the value of the modulation order is greater than or equal to or greater than the threshold of the modulation order, and the value of the bandwidth extension is less than or equal to or less than the threshold of the bandwidth extension, it is determined that the modulation scheme is the QAM.

6. The method according to any one of claims 1 to 3, wherein the threshold of the modulation order is greater than or equal to 2.

7. The method according to any one of claims 1 to 6, wherein the method comprises:

receiving second indication information, wherein the second indication information indicates a modulation capability supported by the terminal device, and the modulation capability is indicated by at least one of the modulation order, the bandwidth extension, the scheduled bandwidth, the spectral efficiency, the MCS index, and the code rate; and
determining the threshold of the first parameter based on the second indication information.

8. The method according to any one of claims 1 to 7, wherein the method comprises:
receiving third indication information, wherein the third indication information indicates whether the terminal device supports the OQAM or the QAM.

9. The method according to any one of claims 1 to 8, wherein the threshold of the modulation order is determined based on at least one of the value of the bandwidth extension, the value of the scheduled bandwidth, the value of the spectral efficiency, the value of the MCS index, or the value of the code rate.

10. A coding scheme determining method, wherein the method comprises:

receiving first indication information, wherein the first indication information indicates a modulation scheme, the modulation scheme is related to a threshold of a first parameter, and the first parameter comprises at least one of the following: a modulation order, bandwidth extension, scheduled bandwidth, spectral efficiency, a modulation and coding scheme MCS index, and a code rate; and
performing modulation or demodulation based on the first indication information.

11. The method according to claim 10, wherein when the threshold of the first parameter meets at least one of the following, the modulation scheme is an offset quadrature amplitude modulation OQAM:
a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

12. The method according to claim 10 or 11, wherein when the threshold of the first parameter meets at least one of the following, the modulation scheme is a quadrature amplitude modulation QAM:
the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

13. The method according to claim 10 or 11, wherein the threshold of the modulation order is 1, the threshold of the bandwidth extension is 0, the value of the modulation order is less than or less than or equal to the threshold of the modulation order, the value of the bandwidth extension is greater than or greater than or equal to the threshold of the bandwidth extension, and the modulation scheme is the OQAM.

14. The method according to claim 10 or 12, wherein the threshold of the modulation order is 1, the threshold of the bandwidth extension is 0, the value of the modulation order is greater than or equal to or greater than the threshold of the modulation order, the value of the bandwidth extension is less than or equal to or less than the threshold of the bandwidth extension, and the modulation scheme is the QAM.

15. The method according to any one of claims 10 to 14, wherein the threshold of the modulation order is greater than or equal to 2.

16. The method according to any one of claims 10 to 15, wherein the method comprises:

sending second indication information, wherein the second indication information indicates a modulation capability supported by a terminal device, and the modulation capability is indicated by at least one of the modulation order, the bandwidth extension, the scheduled bandwidth, the spectral efficiency, the modulation and coding scheme MCS index, and the code rate; and
the threshold of the first parameter is determined based on the second indication information.

17. The method according to any one of claims 10 to 16, wherein the method comprises:
sending third indication information, wherein the third indication information indicates whether the terminal device supports the OQAM or the QAM.

18. The method according to any one of claims 10 to 17, wherein the threshold of the modulation order is determined based on at least one of the value of the bandwidth extension, the value of the scheduled bandwidth, the value of the spectral efficiency, the value of the MCS index, or the value of the code rate.

19. A communication apparatus, wherein the communication apparatus comprises:

a processing unit, configured to determine a modulation scheme, wherein the modulation scheme is related to a threshold of a first parameter, and the first parameter comprises at least one of the following: a modulation order, bandwidth extension, scheduled bandwidth, spectral efficiency, a modulation and coding scheme MCS index, and a code rate; and
a sending unit, configured to send first indication information to a terminal device, wherein the first indication information indicates the modulation scheme.

20. The apparatus according to claim 19, wherein when the threshold of the first parameter meets at least one of the following, the modulation scheme is an offset quadrature amplitude modulation OQAM:
a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

21. The apparatus according to claim 19 or 20, wherein when the threshold of the first parameter meets at least one of the following, the modulation scheme is a quadrature amplitude modulation QAM:
the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

22. The apparatus according to claim 19 or 20, wherein the threshold of the modulation order is 1, the threshold of the bandwidth extension is 0, the value of the modulation order is less than or less than or equal to the threshold of the modulation order, the value of the bandwidth extension is greater than or greater than or equal to the threshold of the bandwidth extension, and the modulation scheme is the OQAM.

23. The apparatus according to claim 19 or 21, wherein the threshold of the modulation order is 1, the threshold of the bandwidth extension is 0, the value of the modulation order is greater than or equal to or greater than the threshold of the modulation order, the value of the bandwidth extension is less than or equal to or less than the threshold of the bandwidth extension, and it is determined that the modulation scheme is the QAM.

24. The apparatus according to any one of claims 19 to 23, wherein the threshold of the modulation order is greater than or equal to 2.

25. The apparatus according to any one of claims 19 to 24, wherein the apparatus further comprises a receiving unit, configured to receive second indication information, wherein the second indication information indicates a modulation capability supported by the terminal device, and the modulation capability is indicated by at least one of the modulation order, the bandwidth extension, the scheduled bandwidth, the spectral efficiency, the modulation and coding scheme MCS index, and the code rate; and
the processing unit is further configured to determine the threshold of the first parameter based on the second indication information.

26. The apparatus according to any one of claims 19 to 25, wherein the apparatus further comprises the receiving unit, further configured to receive third indication information, wherein the third indication information indicates whether the terminal device supports the OQAM or the QAM.

27. The apparatus according to any one of claims 19 to 26, wherein the threshold of the modulation order is determined based on at least one of the value of the bandwidth extension, the value of the scheduled bandwidth, the value of the spectral efficiency, the value of the MCS index, or the value of the code rate.

28. A communication apparatus, wherein the communication apparatus comprises:

a receiving unit, configured to receive first indication information, wherein the first indication information indicates a modulation scheme, the modulation scheme is related to a threshold of a first parameter, and the first parameter comprises at least one of the following: a modulation order, bandwidth extension, scheduled bandwidth, spectral efficiency, a modulation and coding scheme MCS index, and a code rate; and
a processing unit, configured to perform modulation or demodulation based on the first indication information.

29. The apparatus according to claim 28, wherein when the threshold of the first parameter meets at least one of the following, the modulation scheme is an offset quadrature amplitude modulation OQAM:
a value of the modulation order is less than or less than or equal to a threshold of the modulation order, a value of the bandwidth extension is greater than or greater than or equal to a threshold of the bandwidth extension, a value of the scheduled bandwidth is less than or less than or equal to a threshold of the scheduled bandwidth, a value of the spectral efficiency is less than or less than or equal to a threshold of the spectral efficiency, a value of the MCS index is less than or less than or equal to a threshold of the MCS index, or a value of the code rate is less than or less than or equal to a threshold of the code rate.

30. The apparatus according to claim 28 or 29, wherein when the threshold of the first parameter meets at least one of the following, the modulation scheme is a quadrature amplitude modulation QAM:
the value of the modulation order is greater than or equal to or greater than the threshold of the modulation order, the value of the bandwidth extension is less than or equal to or less than the threshold of the bandwidth extension, the value of the scheduled bandwidth is greater than or equal to or greater than the threshold of the scheduled bandwidth, the value of the spectral efficiency is greater than or equal to or greater than the threshold of the spectral efficiency, the value of the MCS index is greater than or equal to or greater than the threshold of the MCS index, or the value of the code rate is greater than or equal to or greater than the threshold of the code rate.

31. The apparatus according to claim 28 or 29, wherein the threshold of the modulation order is 1, the threshold of the bandwidth extension is 0, the value of the modulation order is less than or less than or equal to the threshold of the modulation order, the value of the bandwidth extension is greater than or greater than or equal to the threshold of the bandwidth extension, and it is determined that the modulation scheme is the OQAM.

32. The apparatus according to claim 28 or 30, wherein the threshold of the modulation order is 1, the threshold of the bandwidth extension is 0, the value of the modulation order is greater than or equal to or greater than the threshold of the modulation order, the value of the bandwidth extension is less than or equal to or less than the threshold of the bandwidth extension, and it is determined that the modulation scheme is the QAM.

33. The apparatus according to any one of claims 28 to 32, wherein the threshold of the modulation order is greater than or equal to 2.

34. The apparatus according to any one of claims 28 to 33, wherein the apparatus further comprises a sending unit, configured to send second indication information, wherein the second indication information indicates a modulation capability supported by a terminal device, and the modulation capability is indicated by at least one of the modulation order, the bandwidth extension, the scheduled bandwidth, the spectral efficiency, the modulation and coding scheme MCS index, and the code rate; and
the threshold of the first parameter is determined based on the second indication information.

35. The apparatus according to any one of claims 28 to 34, wherein the apparatus further comprises the sending unit, configured to send third indication information, wherein the third indication information indicates whether the terminal device supports the OQAM or the QAM.

36. The apparatus according to any one of claims 28 to 35, wherein the threshold of the modulation order is determined based on at least one of the value of the bandwidth extension, the value of the scheduled bandwidth, the value of the spectral efficiency, the value of the MCS index, or the value of the code rate.

37. A communication apparatus, wherein the apparatus comprises at least one processor, and the at least one processor is coupled to at least one memory; and
the at least one processor is configured to execute a computer program or instructions in the at least one memory, so that the method according to any one of claims 1 to 9 is performed, or the method according to any one of claims 10 to 18 is performed.

38. A computer-readable storage medium, wherein the computer-readable storage medium stores a computer program or instructions, and when a computer reads and executes the computer program or the instructions, the method according to any one of claims 1 to 9 is performed, or the method according to any one of claims 10 to 18 is performed.

39. A chip system, comprising: a processor, configured to invoke a computer program from a memory and run the computer program, to enable the method according to any one of claims 1 to 9 to be performed, or the method according to any one of claims 10 to 18 to be performed.

FIG. 1

FIG. 2

y

π/2

π     0

FIG. 3

1000    1001     1011    1010

Symbol
1000

1100    1101     1111    1110

Symbol
1111

0100    0101     0111    0110

0000    0001     0011    0010

FIG. 4

(a)                 (b)

FIG. 5

FIG. 6

EP 4 701 106 A1

Method 700

```
┌─────────────────────┐                    ┌─────────────────────┐
│   Network device    │                    │   Terminal device   │
└─────────────────────┘                    └─────────────────────┘
```

S710: Determine a modulation scheme, where the modulation scheme is related to a threshold of a first parameter, and the first parameter includes at least one of the following: a modulation order, bandwidth extension, scheduled bandwidth, spectral efficiency, a modulation and coding scheme MCS index, and a code rate

S720: Send first indication information, where the first indication information indicates the modulation scheme

S730: Perform modulation or demodulation based on the first indication information

FIG. 7

Communication apparatus 800

Processing unit 810

Transceiver unit 820

FIG. 8

Communication apparatus 900

Processor
910

Memory
920

Transceiver
930

FIG. 9

Communication apparatus 1000

Transceiver unit 1010

Processing unit 1020

FIG. 10

Communication apparatus 1100

Processor
1110

Memory
1120

Transceiver
1130

FIG. 11

FIG. 12

13011

1301

Antenna

13012

Radio frequency unit

1300

BBU

RRU

Board

13021

13022

Memory → Processor

1302

FIG. 13

Processor 1410

Interface circuit 1420

FIG. 14

## INTERNATIONAL SEARCH REPORT

| International application No. |
|---|
| **PCT/CN2023/100856** |

| A. | CLASSIFICATION OF SUBJECT MATTER |
|---|---|

H04L 1/00(2006.01)i; H04L27/36(2006.01)i

According to International Patent Classification (IPC) or to both national classification and IPC

| B. | FIELDS SEARCHED |
|---|---|

Minimum documentation searched (classification system followed by classification symbols)

IPC:H04L,H04B

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 调制, 方式, 方案, 确定, 选择, 切换, 阶数, 索引, 阈值, 门限, 指示, 偏置正交幅度调制, 偏移正交幅度调制, modulation, scheme, method, determine, select, switch, order, index, threshold, indicate, OQAM

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108023676 A (ZTE CORP.) 11 May 2018 (2018-05-11) description, paragraphs [0054]-[0084], and figures 2-5 | 1, 6, 7, 9, 10, 15, 16, 18, 19, 24, 25, 27, 28, 33, 34, 36-39 |
| A | CN 108023676 A (ZTE CORP.) 11 May 2018 (2018-05-11) entire document | 2-5, 8, 11-14, 17, 20-23, 26, 29-32, 35 |
| A | CN 108900278 A (GUANGDONG OPPO MOBILE COMMUNICATIONS CO., LTD.) 27 November 2018 (2018-11-27) entire document | 1-39 |
| A | CN 116210182 A (HUAWEI TECHNOLOGIES CO., LTD.) 02 June 2023 (2023-06-02) entire document | 1-39 |
| A | CN 107995141 A (INFORMATION ENGINEERING UNIVERSITY OF PLA) 04 May 2018 (2018-05-04) entire document | 1-39 |
| A | US 2022006558 A1 (T MOBILE USA INC.) 06 January 2022 (2022-01-06) entire document | 1-39 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 February 2024** | **27 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/100856**

| Patent document cited in search report | | | Publication date (day/month/year) | Patent family member(s) | | | Publication date (day/month/year) |
|---|---|---|---|---|---|---|---|
| CN | 108023676 | A | 11 May 2018 | None | | | |
| CN | 108900278 | A | 27 November 2018 | WO | 2019233282 | A1 | 12 December 2019 |
| CN | 116210182 | A | 02 June 2023 | WO | 2022041651 | A1 | 03 March 2022 |
| | | | | US | 2023283400 | A1 | 07 September 2023 |
| | | | | EP | 4199619 | A1 | 21 June 2023 |
| | | | | WO | 2022041290 | A1 | 03 March 2022 |
| | | | | JP | 2023539262 | A | 13 September 2023 |
| CN | 107995141 | A | 04 May 2018 | None | | | |
| US | 2022006558 | A1 | 06 January 2022 | US | 11405129 | B2 | 02 August 2022 |

Form PCT/ISA/210 (patent family annex) (July 2022)